(19) **Europäisches Patentamt**
**European Patent Office**
**Office européen des brevets**

(11) **EP 4 383 834 A1**

(12) **EUROPEAN PATENT APPLICATION**
published in accordance with Art. 153(4) EPC

(43) Date of publication:
**12.06.2024 Bulletin 2024/24**

(21) Application number: **22862750.1**

(22) Date of filing: **25.05.2022**

(51) International Patent Classification (IPC):
**H04W 52/02** $^{(2009.01)}$

(86) International application number:
**PCT/CN2022/094956**

(87) International publication number:
**WO 2023/029608 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2021 CN 202111016801**

(71) Applicant: **Huawei Technologies Co., Ltd.**
**Shenzhen, Guangdong 518129 (CN)**

(72) Inventors:
• **WANG, Chun**
  **Shenzhen, Guangdong 518129 (CN)**
• **ZHU, Shihao**
  **Shenzhen, Guangdong 518129 (CN)**
• **WANG, Yanchun**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **METHOD FOR CONTROLLING TRANSMIT POWER AND COMMUNICATION DEVICE**

(57)    This application provides a method for controlling a transmit power and a communication device. The method includes: obtaining, based on a temperature of a radio frequency device in a first time period and an operating temperature threshold of the radio frequency device, a transmit power threshold of the radio frequency device in the first time period; and controlling a transmit power of the radio frequency device in the first time period to be less than or equal to the transmit power threshold in the first time period. According to the method, a baseband unit apparatus may determine the transmit power threshold through the temperature of the radio frequency device, and the transmit power threshold of the radio frequency device is allowed to dynamically change with a real-time temperature change of the radio frequency device. Therefore, a limitation of the transmit power threshold on a hardware capability of the radio frequency device may be reduced. This helps improve the transmit power of the radio frequency device and avoid overheat of the radio frequency device, so that requirements on both the temperature and transmit power of the radio frequency component are considered, and performance of the communication device is improved.

FIG. 3

## Description

This application claims priority to Chinese Patent Application No. 202111016801.3, filed on August 31, 2021 and entitled "METHOD FOR CONTROLLING TRANSMIT POWER AND COMMUNICATION DEVICE", which is incorporated herein by reference in its entirety.

## TECHNICAL FIELD

This application relates to the field of communication technologies, and in particular, to a method for controlling a transmit power and a communication device.

## BACKGROUND

A radio frequency device is an important device for implementing wireless communication in a communication device. The radio frequency device generates a large amount of heat in an operating process, causing a temperature rise of the radio frequency device. To prevent the radio frequency device from being faulty due to an excessively high temperature, a transmit power of the radio frequency device needs to be limited, to ensure that the radio frequency device can operate stably.

In a conventional technology, a power threshold of the radio frequency device is set in advance based on a highest ambient temperature and a maximum operating load of the radio frequency device. In an operating process of the communication device, the transmit power of the radio frequency device is limited in a specified fixed power threshold.

The foregoing method severely limits performance of the communication device. Therefore, how to control the transmit power to improve the performance of the communication device becomes a problem to be urgently resolved.

## SUMMARY

Embodiments of this application provide a method for controlling a transmit power and a communication device. The method is used to improve performance of the communication device. The technical solution is as follows.

According to a first aspect, this application provides a method for controlling a transmit power. The method is optionally performed by the following apparatuses, but is not limited to the following apparatuses: a baseband unit (baseband unit, BBU), a base station, a chip in the BBU, an access point (access point, AP), and the like. The method includes: obtaining, based on a temperature of a radio frequency device in a first time period and an operating temperature threshold of the radio frequency device, a transmit power threshold of the radio frequency device in the first time period; and controlling a transmit power of the radio frequency device in the first time period to be less than or equal to the transmit power threshold in the first time period. According to the method provided in the first aspect, the baseband unit is used as an example. The baseband unit determines the transmit power threshold based on the temperature of the radio frequency device, and the transmit power threshold of the radio frequency device is allowed to dynamically change with a real-time temperature change of the radio frequency device. Therefore, a limitation of the transmit power threshold on a hardware capability of the radio frequency device is reduced. This helps further improve the transmit power of the radio frequency device and avoid overheat of the radio frequency device, and improves performance of the communication device.

For example, the first time period is optionally one time periodicity of power control. For example, the first time period is 1 second (second, s).

The radio frequency device includes but is not limited to a power amplifier (power amplifier, PA), a transceiver, or a device that generates heat in an operating process of another radio frequency module.

Optionally, the temperature of the radio frequency device in the first time period is a temperature of the radio frequency device at a start moment of the first time period. Alternatively, the temperature of the radio frequency device in the first time period is an average value of temperatures of the radio frequency device at all moments in the first time period.

An operating temperature threshold refers to a highest operating temperature of the radio frequency device. The temperature of the radio frequency device needs to be limited within the operating temperature threshold, to prevent hardware of the radio frequency device from being damaged when the temperature exceeds the operating temperature threshold. For example, a value range of an operating temperature of a radio frequency device is -40° to 100°, and the operating temperature threshold is, for example, 100°, or one temperature value close to 100°.

The transmit power threshold in the first time period is a maximum transmit power that is allowed to be used by the radio frequency device in the first time period. The transmit power threshold in the first time period is related to the temperature of the radio frequency device in the first time period. For example, the higher the temperature of the radio frequency device in the first time period, the smaller the transmit power threshold in the first time period; and the

2

lower the temperature of the radio frequency device in the first time period, the greater the transmit power threshold in the first time period. In some embodiments, a correlation between the transmit power threshold and the temperature specifically means that the transmit power threshold is related to a temperature difference between the temperature and the operating temperature threshold. For example, the closer the temperature of the radio frequency device in the first time period to the operating temperature threshold, the smaller the transmit power threshold in the first time period. The greater the temperature difference between the temperature of the radio frequency device in the first time period and the operating temperature threshold, the greater the transmit power threshold in the first time period.

Optionally, the transmit power threshold is specifically an average transmit power threshold. An average transmit power in the first time period is an average value of instantaneous transmit powers at a plurality of moments in the first time period. When the transmit power threshold is the average transmit power threshold, the foregoing process of controlling the transmit power includes: controlling an average transmit power of the radio frequency device in the first time period to be less than or equal to the transmit power threshold in the first time period. In other words, an objective of control is to ensure that the average value of instantaneous transmit powers of the radio frequency device at a plurality of moments in the first time period does not exceed the transmit power threshold, and optionally, allow the instantaneous transmit powers of the radio frequency device at a part of moments in the first time period to be greater than the transmit power threshold.

Alternatively, the transmit power threshold is specifically an instantaneous transmit power threshold. The instantaneous transmit power threshold in the first time period is a maximum instantaneous transmit power that the radio frequency device is allowed to be used at each moment in the first time period. When the transmit power threshold is the instantaneous transmit power threshold, the foregoing process of controlling the transmit power includes: controlling an instantaneous transmit power at each moment in the first time period to be less than or equal to the transmit power threshold in the first time period. In other words, an objective of control is to ensure that the instantaneous transmit powers of the radio frequency device at all moments in the first time period do not exceed the transmit power threshold.

In some embodiments, a process of obtaining the transmit power threshold specifically includes: obtaining, based on a temperature of the radio frequency device at a start moment of the first time period and the operating temperature threshold of the radio frequency device, a maximum steady-state temperature allowed in the first time period; and obtaining the transmit power threshold of the radio frequency device in the first time period based on the maximum steady-state temperature allowed in the first time period and a correspondence between a temperature of the radio frequency device and a transmit power of the radio frequency device.

In some embodiments, the maximum steady-state temperature is related to a temperature difference between the temperature at the start moment and the operating temperature threshold. For example, if the temperature of the radio frequency device at the start moment of the first time period is closer to the operating temperature threshold, to be specific, the temperature difference between the temperature at the start moment and the operating temperature threshold is smaller, the maximum steady-state temperature allowed in the first time period is smaller.

In some embodiments, a form of a correspondence between a temperature and a transmit power is one function or a group of functions. A specific process of obtaining the transmit power threshold includes: using the maximum steady-state temperature as an input parameter of the function, performing an operation through the function, to obtain the transmit power output by the function, and using the transmit power as the transmit power threshold. Alternatively, a form of the correspondence between the temperature and the transmit power is a table. A plurality of groups of temperatures and transmit powers are stored in the table. A specific process of obtaining the transmit power threshold includes: querying the table by using the maximum steady-state temperature as an index, to obtain the transmit power corresponding to the maximum steady-state temperature in the table.

The baseband unit is used as an example. The baseband unit determines the transmit power threshold in the foregoing manner. This helps improve accuracy of determining the transmit power threshold by the baseband unit.

In some embodiments, when the transmit power threshold is the average transmit power threshold, a specific manner of power control includes: controlling an average value of transmit powers of the radio frequency device in the plurality of scheduling time units in the first time period to be less than or equal to the average transmit power threshold in the first time period. In other words, an objective of control is to ensure that an average value of transmit powers of a plurality of scheduling time units in the first time period does not exceed the transmit power threshold, and optionally, transmit powers of a part of scheduling time units in the first time period are allowed to be greater than the transmit power threshold.

The scheduling time unit is a minimum time unit for controlling the transmit power. Optionally, duration of the scheduling time unit is the same as duration of one TTI. In other words, one scheduling time unit may be one transmission time interval (transmission time interval, TTI). Alternatively, duration of one scheduling time unit is greater than one TTI. For example, one scheduling time unit includes a plurality of TTIs. For example, one scheduling time unit includes 10 TTIs.

An average of the average value of the transmit powers of the plurality of scheduling time units is relative to the plurality of scheduling time units, and optionally, the average value of the transmit powers of the plurality of scheduling time units is equal to a sum of the transmit powers of the scheduling time units divided by a quantity of scheduling time units. For example, the first time period includes n scheduling time units, which are respectively a scheduling time unit 1, a scheduling time unit 2, ..., and a scheduling time unit n. An average value of transmit powers of the n scheduling time units is an average value of n transmit powers such as a transmit power of a radio frequency device in the scheduling time unit 1, a transmit power of a radio frequency device in the scheduling time unit 2, ..., and a transmit power of a radio frequency device in the scheduling time unit n.

In a possible implementation, an implementation of controlling the average transmit power includes: determining a transmit power threshold in each scheduling time unit in the first time period based on the average transmit power in the first time period. In each scheduling time unit in the first time period, the transmit power of the radio frequency device is controlled based on a transmit power threshold corresponding to the scheduling time unit, so that the average value of transmit powers of the plurality of scheduling time units in the first time period is less than or equal to the average transmit power threshold in the first time period. For example, a transmit power threshold in each scheduling time unit in the first time period meets the following constraint condition: $P_{max\_tti-1}+P_{max\_tti-2}\cdots +P_{max\_tti-n}\leq P_{avg\_max}*n$. $P_{max\_tti-1}$ represents a transmit power threshold in a first scheduling time unit in the first time period, $P_{max\_tti-2}$ represents a transmit power threshold in a second scheduling time unit in the first time period, ... represents a transmit power threshold in a scheduling time unit included in the first time period but not shown, $P_{max\_tti-n}$ represents a transmit power threshold in an $n^{th}$ scheduling time unit in the first time period, $P_{avg\_max}$ represents an average transmit power threshold in the first time period, and n represents a quantity of scheduling time units in the first time period, and n is a positive integer.

In some embodiments, the average transmit power threshold in the first time period is determined in the following manner: Calculation is performed by using a formula $T_{Lk}=T_r\text{-}Ta+\tau/p*(T_{max}\text{-}T_r)$ based on the temperature at the start moment of the first time period and the operating temperature threshold of the radio frequency device, to obtain the maximum steady-state temperature allowed in the first time period. load $L_k$ corresponding to $T_{Lk}$ is determined based on the maximum steady-state temperature allowed in the first time period and the formula $T_{Ln}=fn(L_1, L_2, ..., L_n)$, and the average transmit power threshold in the first time period is determined based on the formula $P_{Tmax}=L_k$.

$T_{Lk}$ represents the maximum steady-state temperature allowed in a $k^{th}$ periodicity (namely, the first time period). $T_r$ represents a real-time temperature of the radio frequency device at a start moment of the $k^{th}$ periodicity. Ta represents an environment compensation amount. $\tau$ represents a time constant. p represents a time length of the first time period. $T_{max}$ represents a maximum allowable operating temperature (namely, the operating temperature threshold) of the radio frequency device. $L_1, L_2, ..., L_n$ respectively represent load of each of the n radio frequency devices. $P_{Tmax}$ represents a maximum transmit power (namely, an average transmit power threshold) allowed based on a highest operating temperature of the radio frequency device, and both n and k are positive integers.

The baseband unit is used as an example. The baseband unit controls power in this implementation, to avoid excessively limiting a maximum transmit power that is allowed to be used in each scheduling time unit. This improves utilization of a hardware capability of the radio frequency device, and improves a downlink user throughput rate.

The first scheduling time unit in the first time period is used as an example, a power threshold in the first scheduling time unit is optionally determined based on a power transmitted by the radio frequency device in one or more scheduling time units before the first scheduling time unit. An example in which the first time period includes the first scheduling time unit and the second scheduling time unit is used. Optionally, a manner of obtaining the transmit power threshold in the first scheduling time unit includes: determining the transmit power threshold in the first scheduling time unit based on the average transmit power threshold in the first time period and the transmit power of the radio frequency device in the second scheduling time unit; and controlling a transmit power of the radio frequency device in the first scheduling time unit to be less than or equal to the transmit power threshold in the first scheduling time unit.

The first scheduling time unit is one scheduling time unit in the first time period. Optionally, the first scheduling time unit is a scheduling time unit in which a current time point is located. Optionally, in addition to the first scheduling time unit, the first time period further includes one or more another scheduling time units. Optionally, a power control manner of the another scheduling time unit is the same as a power control manner of the first scheduling time unit. In other words, power control is performed on each scheduling time unit in the first time period in a manner similar to a manner of the first scheduling time unit.

The second scheduling time unit is located before the first scheduling time unit. In other words, compared with the first scheduling time unit, the second scheduling time unit is one historical scheduling time unit. A specific time relationship between the second scheduling time unit and the first scheduling time unit involves a plurality of possible cases. The following describes various possible cases of the second scheduling time unit and the first scheduling time unit by using examples.

Optionally, the second scheduling time unit is adjacent to the first scheduling time unit. In other words, an end moment of the second scheduling time unit is the start moment of the first scheduling time unit. Alternatively, the second scheduling time unit is not adjacent to the first scheduling time unit, and there is a specific slot between the end moment of the second scheduling time unit and the start moment of the first scheduling time unit. For example, the first scheduling time unit and the second time unit each are two 1 ms, and the first scheduling time unit and the second time unit are optionally separated by a slot such as 1 microsecond ($\mu$s).

Optionally, the second scheduling time unit is a previous scheduling time unit of the first scheduling time unit in the first time period. Alternatively, the second scheduling time unit and the first scheduling time unit are separated by one or more scheduling time units. For example, the second scheduling time unit is a $TTI_1$, and the first scheduling time unit is a $TTI_3$, where duration of one scheduling time unit is one TTI.

Optionally, all moments of the second scheduling time unit are located before the first scheduling time unit. In other words, on a time axis, the second scheduling time unit does not overlap with the first scheduling time unit. Alternatively, one part of moments of the second scheduling time unit are located before the first scheduling time unit, and the other part of moments of the second scheduling time unit fall within the first scheduling time unit. In other words, on the time axis, the second scheduling time unit overlaps with the first scheduling time unit. For example, the second scheduling time unit is a $TTI_1$ to a $TTI_3$, and the first scheduling time unit is a $TTI_2$ to a $TTI_4$, where duration of one scheduling time unit is three TTIs.

In some embodiments, the transmit power threshold in the first scheduling time unit is negatively correlated with a value of the transmit power in the second scheduling time unit.

For example, the negative correlation refers to an inverse proportion relationship. In other words, the value of the transmit power in the second scheduling time unit affects the transmit power threshold in the first scheduling time unit. The greater the value of the transmit power in the second scheduling time unit, the smaller the transmit power threshold in the first scheduling time unit. For example, the value of the transmit power in the second scheduling time unit and the transmit power threshold in the first scheduling time unit meet the following constraint condition: $P_{max\_last\_tti}+P_{max\_tti}\leq P_{avg\_max}*n$. $P_{max\_last\_tti}$ represents a value of a transmit power of the radio frequency device in the second scheduling time unit, $P_{max\_tti}$ represents a transmit power threshold of the radio frequency device in the first scheduling time unit, $P_{avg\_max}$ represents an average transmit power threshold, and n represents a quantity of scheduling time units in the first time period, and n is a positive integer.

In this implementation, it is ensured that the average transmit power does not exceed the threshold, and the transmit power threshold changes with a service requirement. This increases the transmit power of the radio frequency device.

In some embodiments, the transmit power threshold in the first scheduling time unit is negatively correlated with the value of the transmit power in the second scheduling time unit, which is specifically represented as: When the transmit power of the radio frequency device in the second scheduling time unit is less than the average transmit power threshold, the transmit power of the radio frequency device in the first scheduling time unit is greater than the average transmit power threshold in the first time period; or when the transmit power of the radio frequency device in the second scheduling time unit is greater than the average transmit power threshold in the first time period, the transmit power of the radio frequency device in the first scheduling time unit is less than the average transmit power threshold in the first time period.

In the foregoing implementation, utilization of a hardware capability of the radio frequency device and a downlink user throughput rate are improved.

In some embodiments, the transmit power in the first scheduling time unit is related to a set base power. The base power is a minimum transmit power that is allowed to be used by the radio frequency device in one scheduling time unit. When the base power is introduced, the transmit power in the first scheduling time unit optionally meets the following constraint condition.

$$P_{base}\leq P_{max\_tti\text{-}i}\leq P_{avg\_max}*n-P_{base}*(n-i)-(P_{max\_tti\text{-}1}+P_{max\_tti\text{-}2}\ldots+P_{max\_tti\text{-}i\text{-}1})$$

$P_{base}$ represents the base power, $P_{max\_tti\text{-}1}$ represents the transmit power threshold in the first scheduling time unit, $P_{avg\_max}$ represents the average transmit power threshold, n represents the quantity of scheduling time units in the first time period, (n-i) represents the quantity of scheduling time units after the first scheduling time unit in the first time period, and $(P_{max\_tti\text{-}1}+P_{maxtti\text{-}2}\ldots+P_{max\_tti\text{-}i\text{-}1})$ represents a sum of transmit powers of all scheduling time units before the first scheduling time unit in the first time period, n and i are positive integers, and i is less than or equal to n.

For example, duration of the first time period is 1s. Duration of one scheduling time unit is 1 ms, to be specific, the first time period includes 1000 scheduling time units in total. An average transmit power threshold in the first time period is 80 watts (watt, W, watt for short). The base power is 20 W. An example in which the first scheduling time unit is the 700th ms in 1s. There are 300 ms left after the first scheduling time unit in the first time period. To be specific, a quantity of scheduling time units after the first scheduling time unit in the first time period is 300, and all scheduling time units before the first scheduling time unit are 699 ms before the 700th ms in 1s. If a total of 20000 W has been transmitted in the 699 ms, a sum of transmit powers in the foregoing constraint condition is 20000 W, the constraint condition that the transmit power in the first scheduling time unit meets is specifically as follows: 20≤the transmit power threshold in the first scheduling time unit≤80* 1000-20*300-20000.

An example in which the baseband unit implements the foregoing implementation is used. The baseband unit restricts the transmit power threshold in each scheduling time unit based on the base power and the average transmit power threshold, so that a power threshold in a subsequent scheduling time unit may at least obtain the base power. This avoids that the radio frequency device uses too much power in a previous scheduling time unit, and consequently, the radio frequency device in the subsequent scheduling time unit does not have a transmit power. In this way, power allocation is more even, and a minimum power is implemented.

There are a plurality of manners for determining the power threshold in the first scheduling time unit based on powers transmitted in the plurality of scheduling time units before the first scheduling time unit. An example in which a second scheduling time unit and a third scheduling time unit exist before the first scheduling time unit is used. A process of power control includes: obtaining a sum of transmit powers of the radio frequency device in the second scheduling time unit and the third scheduling time unit; determining a transmit power threshold in the first scheduling time unit based on the average transmit power threshold in the first time period and the sum of transmit powers, where the transmit power threshold in the first scheduling time unit is negatively correlated with a value of the sum of transmit powers; and controlling a transmit power of the radio frequency device in the first scheduling time unit to be less than or equal to the transmit power threshold in the first scheduling time unit.

The first scheduling time unit, the second scheduling time unit, and the third scheduling time unit are three scheduling time units included in the first time period. The second scheduling time unit and the third scheduling time unit are located before the first scheduling time unit.

The sum of transmit powers of the second scheduling time unit and the third scheduling time unit represents a total number of powers used by the radio frequency device in the second scheduling time unit and the third scheduling time unit. The sum of transmit powers is a sum of transmit powers such as the transmit power of the radio frequency device in the second scheduling time unit and the transmit power of the radio frequency device in the third scheduling time unit.

The transmit power threshold in the first scheduling time unit is negatively correlated with a value of the sum of transmit powers of the second scheduling time unit and the third scheduling time unit. In other words, the greater powers used by the second scheduling time unit and the third scheduling time unit in total, the smaller the transmit power threshold in the first scheduling time unit. For example, the sum of transmit powers of the second scheduling time unit and the third scheduling time unit and the transmit power threshold in the first scheduling time unit meet the following constraint condition: $P_{max\_last\_last\_tti}+P_{max\_last\_tti}+P_{max\_tti}\leq P_{avg\_max}*n$. $P_{max\_last\_last\_tti}$ represents the transmit power of the radio frequency device in the third scheduling time unit, $P_{max\_last\_tti}$ represents the transmit power of the radio frequency device in the second scheduling time unit, $P_{max\_last\_last\_tti}+P_{max\_last\_tti}$ represents the sum of transmit powers of the radio frequency device in the second scheduling time unit and the third scheduling time unit, $P_{avg\_max}$ represents the average transmit power threshold in the first time period, and n represents the quantity of scheduling time units in the first time period, and n is a positive integer.

A case that there are two scheduling time units before the first scheduling time unit is merely an example. Optionally, there are more than two scheduling time units before the first scheduling time unit in the first time period. For example, there are not only the second scheduling time unit and the third scheduling time unit but also the fourth scheduling time unit, the fifth scheduling time unit, or more scheduling time units before the first scheduling time unit. Optionally, the communication device determines the transmit power threshold in the first scheduling time unit based on a sum of transmit powers of more scheduling time units. For example, the communication device determines the transmit power in the first scheduling time unit based on the average transmit power threshold in the first time period and the sum of transmit powers of all scheduling time units before the first scheduling time unit in the first time period. In some embodiments, the communication device accumulates a sum of transmit powers of all scheduling time units that have been used in the first time period. For example, each time passing one scheduling time unit, the communication device adds, to an accumulation result, a power transmitted by a radio frequency device in the scheduling time unit, and then determines a transmit power threshold in a next scheduling time unit based on an updated accumulation result.

The baseband unit is used as an example. The baseband unit determines a power threshold in the current scheduling time unit based on the total transmit powers of the plurality of previous scheduling time units. This helps achieve an objective that the average transmit power in one periodicity does not exceed the threshold, and avoids excessive limitation on a power threshold in each scheduling time unit. This helps a power control process match a random peak-to-valley change of a downlink load, improves a downlink user throughput rate, and improves a scheduling effect.

Control of a transmit power includes a plurality of implementations. The following describes two control manners by using examples. For details, refer to the following control manner 1 and control manner 2.

Control manner 1: By adjusting a bandwidth occupied by data sent by the radio frequency device on a data channel, a transmit power of the radio frequency device in the first time period is controlled to be less than or equal to the transmit power threshold in the first time period.

Because a value of the transmit power is related to a value of an occupied bandwidth, after the communication device adjusts the value of the occupied bandwidth, the value of the transmit power changes accordingly. Therefore, the transmit power may be adjusted by adjusting the bandwidth. Specifically, the communication device may increase the transmit power of the radio frequency device by increasing the bandwidth occupied by the data on the data channel. The communication device may reduce the transmit power of the radio frequency device by reducing the bandwidth occupied by the data on the data channel.

The data channel is a channel used to carry service data of a user. The data channel is, for example, a physical downlink shared channel (physical downlink shared channel, PDSCH).

Control manner 2: By adjusting a power spectral density of the radio frequency device, a transmit power of the radio frequency device in the first time period is controlled to be less than or equal to the transmit power threshold in the first time period.

Because the value of the transmit power is related to the power spectral density, after the communication device adjusts the value of the power spectral density, the value of the transmit power changes accordingly. Therefore, the transmit power may be adjusted by adjusting the power spectral density. Specifically, the communication device may increase the transmit power of the radio frequency device by increasing the power spectral density of the radio frequency device. The communication device may reduce the transmit power of the radio frequency device by reducing the power spectral density of the radio frequency device.

By using the foregoing control manner 1 and control manner 2, an objective that the transmit power may be controlled to meet a requirement is achieved, and a delay of controlling the transmit power may be reduced. This improves timeliness.

In some embodiments, the method further includes: obtaining the temperature of the radio frequency device in the first time period.

In some embodiments, the temperature of the radio frequency device in the first time period is obtained through a temperature model. Specifically, there are a plurality of manners of obtaining the temperature through the temperature model. In a possible implementation, the temperature model is used to predict the temperature of the radio frequency device based on load of the radio frequency device. Correspondingly, a process of obtaining the temperature includes: predicting the temperature of the radio frequency device in the first time period based on the load of the radio frequency device in the first time period and the temperature model. In another possible implementation, the temperature model is used to predict the temperature of the radio frequency device based on the load of the radio frequency device. Correspondingly, a process of obtaining the temperature includes: predicting a temperature variation amount of the radio frequency device in the first time period based on load of the radio frequency device in the first time period and the temperature model; and determining the temperature of the radio frequency device in the first time period based on the temperature of the radio frequency device at the start moment of the first time period and the temperature variation amount.

The baseband unit is used as an example. In the foregoing implementation, the baseband unit determines the temperature by using the temperature model. This helps accurately obtain a real-time temperature of the radio frequency device at each moment, to implement continuous tracking of the real-time temperature of the radio frequency device. In this case, power control performed by using the precise real-time temperature helps implement precise thermal management, and ensures that the real-time temperature of the radio frequency device at each moment does not exceed the threshold.

In some embodiments, the temperature model includes an environment compensation amount, and the environment compensation amount is used to compensate for impact caused by an environment in which the radio frequency device is located on the temperature of the radio frequency device.

In the foregoing implementation, because the environment compensation amount is introduced into the temperature model, impact caused by the environment may be compensated for through the environment compensation amount. This reduces an error caused by the environment, and improves accuracy of predicting the temperature by using the temperature model.

In some embodiments, the temperature of the radio frequency device in the first time period is obtained through detection through a temperature sensor. In a possible implementation, a remote radio unit (remote radio unit, RRU) or an active antenna processing unit (active antenna unit, AAU) in which the radio frequency device is located includes the temperature sensor. The RRU or the AAU detects the temperature of the radio frequency device in the first time period through the temperature sensor. The RRU or the AAU sends the detected temperature to the BBU. The BBU receives the temperature sent by the RRU or the AAU, to obtain the temperature of the radio frequency device in the first time period.

In some embodiments, the foregoing method is performed by the BBU.

In some embodiments, after the first time period, a temperature of the radio frequency device is less than or equal to the operating temperature threshold.

In the foregoing manner, a risk that the radio frequency device is damaged after the temperature exceeds the threshold is avoided. This helps ensure stable operation of the radio frequency device and improves reliability.

In some embodiments, the temperature model is established based on the following formula:

$$T_n = T_{n-1} + (T_{Ln} + T - T_{n-1}) * q_n / \tau;$$

where

$T_n$ represents a temperature of the radio frequency device after a scheduling time unit n in the first time period, $T_{n-1}$ represents a temperature of the radio frequency device after a scheduling time unit (n-1) in the first time period, $L_n$ represents load of the radio frequency device in an $n^{th}$ scheduling time unit in the first time period, $T_{Ln}$ represents a steady-state temperature reached by the radio frequency device when load is $L_n$, T represents an environment compensation amount, $\tau$ is a time constant, and $q_n$ represents duration of the scheduling time unit n. n represents a sequence number of the scheduling time unit, n is a positive integer, and a maximum value of n is a quantity of scheduling time units included in the first time period. A first scheduling time unit is a scheduling time unit 1, and a last scheduling time unit is the scheduling time unit n. When a value of n is 1, n-1 represents a start moment of the first time period. For example, T0 represents a temperature of the radio frequency device at the start moment of the first time period. One scheduling time unit includes one or more TTIs.

The temperature model is established through the foregoing formula. Because the temperature ($T_n$) at the end of one time periodicity is calculated by using a transmit power in each scheduling time unit, the temperature may be determined more accurately, and an error is reduced.

According to a second aspect, a communication device is provided. The communication device has a function of implementing the first aspect or any optional manner of the first aspect. The communication device includes at least one unit, and the at least one unit is configured to implement the method provided in the first aspect or any optional manner of the first aspect.

In some embodiments, a unit in the communication device is implemented through software, and the unit in the communication device is a program module. In some other embodiments, the unit in the communication device is implemented through hardware or firmware. For specific details of the communication device provided in the second aspect, refer to the first aspect or any optional manner of the first aspect. Details are not described herein again.

According to a third aspect, a communication device is provided. Optionally, the communication device is a BBU, a base station, a chip in the BBU, an AP, or the like. The communication device includes a processor, the processor is coupled to a memory, the memory is configured to store computer program instructions, and the processor is configured to execute the computer program instructions in the memory, to enable the communication device to perform the method provided in the first aspect or any optional manner of the first aspect.

According to a fourth aspect, a network system is provided. The network system includes a baseband unit BBU and a radio frequency device, and the BBU is configured to perform the method according to the first aspect or any optional manner of the first aspect.

According to a fifth aspect, a computer-readable storage medium is provided. The storage medium stores at least one instruction. When the instructions are run on a computer, the computer is enabled to perform the method according to the first aspect or any optional manner of the first aspect.

According to a sixth aspect, a computer program product is provided. The computer program product includes one or more computer program instructions. When the computer program instructions are loaded and run by a computer, the computer is enabled to perform the method according to the first aspect or any optional manner of the first aspect.

According to a seventh aspect, a chip is provided, including a memory and a processor. The memory is configured to store computer instructions, and the processor is configured to invoke the computer instructions from the memory and run the computer instructions, to perform the method in the first aspect and any possible implementation of the first aspect.

**BRIEF DESCRIPTION OF DRAWINGS**

FIG. 1 is a schematic diagram of an application scenario according to an embodiment of this application;
FIG. 2 is a schematic diagram of a logical function architecture according to an embodiment of this application;
FIG. 3 is a flowchart of a method for controlling a transmit power according to an embodiment of this application;
FIG. 4A and FIG. 4B are flowcharts of a method for controlling a transmit power according to an embodiment of this application;
FIG. 5 is a schematic diagram of each TTI in one scheduling periodicity according to an embodiment of this application;
FIG. 6 is a schematic diagram of a transmit power in each scheduling time unit in a period of time according to an embodiment of this application;
FIG. 7 is a schematic diagram of a structure of a communication device according to an embodiment of this application; and

FIG. 8 is a schematic diagram of a structure of a communication device 800 according to an embodiment of this application.

## DESCRIPTION OF EMBODIMENTS

To make the objectives, technical solutions, and advantages of this application clearer, the following further describes the implementations of this application in detail with reference to the accompanying drawings.
The following explains and describes some terms and concepts in embodiments of this application.

(1) Transmission time interval (transmission time interval, TTI)

The TTI is a minimum time unit for radio resource management and scheduling. Optionally, duration of one TTI is 1 ms or 0.5 ms.
During downlink scheduling, a baseband unit (baseband unit, BBU) transmits to-be-transmitted data in a downlink buffer through a proper quantity of air interface resources after passing one TTI. The more the to-be-transmitted data, the more air interface resources used at the TTI, and the greater the corresponding radio frequency transmit power. The TTI is also referred to as a sending time interval.

(2) Physical downlink shared channel (physical downlink shared channel, PDSCH)

The PDSCH is a downlink channel in the fourth generation (fourth generation, 4G) and fifth generation (fifth generation, 5G) mobile communication standards, and the PDSCH is used to transmit user data.

(3) Time-frequency resource block (resource block, RB)

The RB is a physical resource unit that may be scheduled for a data channel in a wireless network. The greater the quantity of RBs occupied during data sending, the larger the occupied bandwidth.

(4) Power spectral density

The power spectral density indicates a transmit power per unit bandwidth. For example, the power spectral density represents how much power is transmitted on one RB.

(5) Steady-state temperature

A steady state is a relatively stable state. The steady-state temperature refers to a temperature that does not change with time. In some embodiments of this application, the steady-state temperature is specifically a basically unchanged temperature that is reached by the radio frequency device under a specific load and a specific environment condition. Generally, when the radio frequency device starts to operate under load and an environment condition, a temperature of the radio frequency device does not reach a steady-state temperature corresponding to the load and the environment condition instantly, but needs to wait for a specific period of time before reaching the steady-state temperature corresponding to the load and the environment condition. For example, the radio frequency device initially operates under load of 30%, and the steady-state temperature is m degrees Celsius (°C). Then, the radio frequency device operates under load of 80%. Because the load increases, the temperature of the radio frequency device gradually increases. After a period of time (in this period, the load of the radio frequency device remains 80%), the temperature of the radio frequency device increases from m°C to n°C, then the temperature of the radio frequency device remains n°C, and the temperature of the radio frequency device does not increase. In this example, a steady-state temperature corresponding to the load of 80% may be referred to as n°C.

(6) Power amplifier (power amplifier, PA)

The power amplifier is a radio frequency device, and the power amplifier is configured to amplify a power of a radio frequency signal. The power amplifier is one of the main sources of heat generated in a remote radio unit (remote radio unit, RRU).

(7) Scheduling time unit

The scheduling time unit is a minimum time unit for controlling the transmit power. Optionally, duration of the scheduling time unit is the same as duration of one TTI. In other words, one scheduling time unit is one TTI. Alternatively, duration of one scheduling time unit is greater than one TTI. For example, one scheduling time unit includes a plurality of TTIs. For example, one scheduling time unit includes 10 TTIs.

Optionally, duration of one scheduling time unit is determined based on a requirement for scheduling precision and a calculation amount. For example, the higher requirement on the scheduling precision, the greater the quantity of scheduling time units obtained by dividing one time periodicity, and the shorter the duration of the scheduling time unit, to improve scheduling control precision and reduce an error. When a requirement for reducing a calculation amount is higher, the quantity of scheduling time units obtained by dividing one time periodicity is smaller, and the duration of the scheduling time unit is longer, to reduce a calculation amount and implementation complexity. Specific duration of one scheduling time unit is not limited in this embodiment.

A cellular mobile communication standard has evolved from 2G, 3G, 4G to 5G. No matter how the standard evolves, a base station is one of the most important components of a cellular mobile communication network. In a 2G technology, the base station is usually referred to as a base transceiver station (base transceiver station, BTS) or a base station controller (base station controller, BSC). In a 3G technology, the base station is usually referred to as a NodeB (NodeB) or a radio network controller (radio network controller, RNC) in a communication system. In a 4G technology, the base station is usually referred to as an evolved NodeB (evolved NodeB, eNB). In a 5G technology, the base station is usually referred to as a next generation NodeB (next generation NodeB, gNB).

The base station includes a BBU, an RRU, and an antenna. The BBU mainly processes uplink and downlink baseband signals, processes transmission signals between the base station and a core network and between the base station and a controller, and manages and monitors the entire base station. A process of processing a downlink signal by the RRU mainly includes completing conversion between a baseband signal and a radio frequency signal, modulation of the downlink signal, up-conversion, power amplification, and filtering. The antenna is configured to transmit an amplified radio frequency signal, to implement wireless communication between the base station and a terminal. The RRU processes the uplink signal in reverse order of processing the downlink signal. The RRU may be integrated with the antenna. An apparatus that integrates the RRU and the antenna is referred to as the active antenna processing unit (active antenna unit, AAU). The AAU may support up to 32, 64, or more transceiver channels. This helps implement a beamforming function and improves a coverage distance, an uplink and downlink capacity, and terminal user experience of the base station. Generally, the RRU and the AAU are collectively referred to as radio frequency modules.

In an outdoor environment, a distance between a terminal served by one base station and an antenna may reach hundreds of meters to thousands of meters, and a high path loss is caused. To communicate with the terminal, the base station needs to transmit a high-power radio frequency signal in a downlink direction. The power amplifier (power amplifier for short) configured to amplify a radio frequency signal generates a large amount of heat in an operating process, and the heat generated by the power amplifier may reach hundreds of watts (watts, W, watt for short). In addition to the power amplifier, other radio frequency devices in the radio frequency module also generate specific heat during operating. All the heat generated by the radio frequency module causes a temperature of a device in the radio frequency module to rise. If the temperature of the radio frequency device exceeds a temperature range allowed for normal operation of the radio frequency device, the radio frequency device may be faulty, and performance of the base station may be degraded, or even communication between the base station and the terminal may be interrupted. To discharge heat generated in an operating process of the radio frequency device to surrounding space in time, and ensure that the temperature of the device in the radio frequency module is not excessively high, a corresponding heat dissipation technology is used in the radio frequency module. Heat dissipation technologies include designing heat sink fins on a surface of the radio frequency module, to increase a heat dissipation area and accelerate heat dissipation to space, and improve a heat conduction effect between the device and the heat sink fins by using a heat conduction pad and heat conduction adhesive inside the radio frequency module. Finally, the heat generated by the radio frequency module and a heat dissipation capability are balanced, to ensure that the radio frequency module may operate stably for a long time under a specific operating condition.

The mobile communication industry continuously evolves standards and pursues a higher modulation and coding scheme and a larger bandwidth, to provide a higher data transmission rate for the user and support more diversified service experience. The mobile communication industry evolves from gaussian minimum shift keying (gaussian minimum shift keying, GMSK) and 8 phase shift keying (8 phase shift keying, 8PSK) modulation in a 2G standard to 16 quadrature amplitude modulation (quadrature amplitude modulation, QAM), 64 QAM and 256 QAM modulation in a 4G standard. A carrier bandwidth evolves from 200 kHz (kHz) in the 2G standard to 3.84 Mega Hertz (Mega Hertz, MHz) in a 3G standard to 20 MHz in an LTE standard. 5G further supports a carrier with a bandwidth of 100 MHz. However, a high peak-to-average ratio and error vector magnitude (error vector magnitude, EVM) of a radio frequency signal in high-order modulation coding and a large bandwidth require high linearity of the power amplifier. Under these requirements, it is rather difficult to improve efficiency of the power amplifier. The efficiency of the power amplifier refers to a ratio of an output power (namely, transmit power) of the power amplifier to a power provided by a power supply for the power amplifier. Currently, it is already difficult to increase the efficiency of the power amplifier to 50%, and it is difficult to greatly improve the efficiency of the power amplifier in the future. Due to the limited efficiency of the power amplifier, heat generated by the power amplifier cannot be greatly reduced under a specific transmit power. In many scenarios, a base station needs to transmit a high-power radio frequency signal. As the transmit power increases, the radio frequency module also generates more heat. Another continuous evolution trend of radio frequency modules is to integrate more frequency bands and more carriers into a single module. In the 2G era, one radio frequency module supports one 200 kHz carrier in the 900 MHz or 1800 MHz frequency band. In the 3G era, one radio frequency module supports one 3.84 MHz carrier in the 2.1 GHz frequency band. In the 4G era, a single radio frequency module supports two frequency bands: 1800 MHz and 2100 MHz. Each frequency band supports one to two products of 20 MHz carriers. More frequency bands and carriers mean a higher transmit power of a single radio frequency module.

Power consumption of the radio frequency module increases due to the foregoing factors, and heat generated by the radio frequency module in an operating process increases. Although a problem of heat increasing may be resolved by increasing a heat sink fin of the radio frequency module and increasing a heat dissipation area, this manner increases a size, a weight, and costs of the radio frequency module, and is not conducive to engineering deployment of a mobile operator. Mainstream base station product vendors seek to reduce the size and weight of the radio frequency module as much as possible while meeting the heat dissipation requirement.

With the requirements of a large bandwidth, a high power, high performance, and a low cost, the heat management technology of the radio frequency module becomes one of the key technologies for improving the performance of a base station product and market competition. With the same bandwidth and transmit power, a base station product with a smaller size and lower weight is more popular among operators. With the same size and weight, a base station product that supports a larger bandwidth and a higher transmit power is more advantageous.

However, embodiments of this application provide a method that helps improve a transmit power of a radio frequency module of a radio base station. By tracking a real-time temperature of the radio frequency module, a maximum transmit power allowed to be used is determined by using a temperature of the radio frequency module and a maximum operating temperature of the radio frequency module as a limit, and the transmit power is scheduled without exceeding the maximum transmit power, to increase the transmit power of the radio frequency module and improve utilization of a hardware capability of the radio frequency module when the temperature is lower than the maximum operating temperature and the load is less than load of 100%. In this way, performance of the base station is higher when the temperature is lower than the maximum operating temperature and the load is less than the load of 100%. In addition, when the temperature of the radio frequency module is close to a temperature threshold, accurate transmit power control may be performed, to avoid that the temperature of the radio frequency module exceeds the temperature threshold, and reduce impact on performance. The method provided in this embodiment is used to implement heat management. When a size, a weight, and a heat dissipation capability of the radio frequency module remain unchanged, a higher transmit power and a larger bandwidth are supported. This improves performance. Under the same transmit power and bandwidth, a size and a weight of the radio frequency module may be reduced. This reduces costs.

Embodiments of this application are applied to a wireless network. Optionally, embodiments of this application are applied to a cellular mobile communication network. A cellular mobile communication network to which embodiments of this application are applied includes but is not limited to a 4G network, for example, a long term evolution (long term evolution, LTE) network, a 5G network, for example, a new radio (new radio, NR) network, a third generation (third generation, 3G) network, for example, a universal mobile telecommunications system (universal mobile telecommunications system, UMTS) network, or a wireless network that supports a plurality of wireless technologies, for example, a wireless network that supports an LTE technology and an NR technology. Optionally, embodiments of this application are applied to a wireless local area network (wireless local area network, WLAN).

The following describes an application scenario of embodiments of this application by using examples.

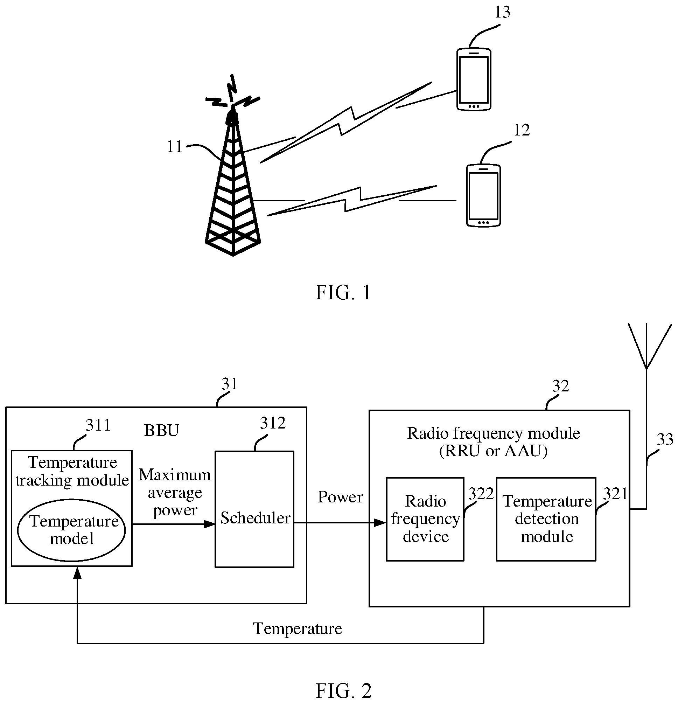

FIG. 1 is a schematic diagram of an application scenario according to an embodiment of this application. The scenario shown in FIG. 1 includes a communication device 11, a terminal 12, and a terminal 13.

The communication device 11 has a plurality of product forms. The following describes some possible forms of the communication device 11.

Optionally, the communication device 11 is a base station. For example, the communication device 11 includes but is not limited to a base transceiver station (base transceiver station, BTS) and a base station controller (base station controller, BSC) in a 2G access technology communication system, a NodeB (NodeB) and a radio network controller (radio network controller, RNC) in a 3G access technology communication system, an evolved NodeB (evolved NodeB, eNB) in a 4G access technology communication system, a next generation NodeB (next generation NodeB, gNB) in a 5G access technology communication system, and the like.

Optionally, the communication device 11 is an access point (access point, AP) in a wireless local area network (wireless local area network, WLAN), and the communication device 11 communicates with the terminal 12 and the terminal 13 in a wireless manner by using the institute of electrical and electronics engineers (institute of electrical and electronics engineers, IEEE) 802.11 series, for example, the 802.11ax or 802.11be standard.

Optionally, the communication device 11 is a BBU or a chip in a BBU.

The terminal 12 and the terminal 13 are devices that provide voice or data connectivity for a user. The terminal is also referred to as user equipment (user equipment, UE), a mobile station (mobile station), a subscriber unit (subscriber unit), a station (station), terminal equipment (terminal equipment, TE), and the like. The terminal includes but is not limited to a cellular phone (cellular phone), a personal digital assistant (personal digital assistant, PDA), a wireless modem (modem), a handheld (handheld) device, a laptop computer (laptop computer), a cordless phone (cordless phone), a wireless local loop (wireless local loop, WLL), a tablet computer (pad), and the like. With development of wireless communication technologies, a device that can access a communication system, communicate with a network side of a communication system, or communicate with another object through a communication system may be the terminal in embodiments of this application. For example, the terminal may also be a terminal and a car in intelligent transportation, a household device in a smart home, a power meter reading instrument in a smart grid, a voltage monitoring instrument, an environment monitoring instrument, a video surveillance instrument in an intelligent security network, a cash register, or the like.

A scenario in which the communication device shown in FIG. 1 communicates with two terminals is merely an example. Optionally, a quantity of terminals communicating with the communication device is greater or less. For example, there is only one terminal. For another example, there are dozens of terminals, hundreds of terminals, or more terminals. A quantity of terminals is not limited in this embodiment.

FIG. 2 is a schematic diagram of a logical function architecture according to an embodiment of this application. The function architecture shown in FIG. 2 may be applied to the communication device 11 in the method shown in FIG. 1. For example, the communication device 11 includes a BBU 31, a radio frequency module 32, and an antenna 33 shown in FIG. 2.

The function architecture shown in FIG. 2 includes the BBU 31, the radio frequency module 32, and the antenna 33.

The BBU 31 includes a temperature tracking module 311 and a scheduler 312.

The temperature tracking module 311 is configured to track a real-time temperature of a radio frequency device 322 through a temperature model. The scheduler 312 is configured to perform adaptive scheduling on a transmit power based on a real-time temperature of the radio frequency device 322, so that the temperature of the radio frequency device 322 does not exceed a maximum operating temperature.

The radio frequency module 32 includes a temperature detection module 321 and one or more radio frequency devices 322. The radio frequency module 32 is, for example, an RRU, or a part that is in an AAU and that is configured to implement a radio frequency function. The temperature detection module 321 is configured to detect the temperature of the radio frequency device 322. The temperature detection module 321 includes, for example, one or more temperature sensors. The radio frequency device 322 is configured to transmit a radio frequency signal. The radio frequency device 322 includes but is not limited to a power amplifier or another device.

FIG. 2 is described by using an example in which a maximum average power is calculated by the temperature tracking module 311. As shown in FIG. 2, the temperature tracking module 311 calculates a maximum average power. Then, the temperature tracking module 311 sends the maximum average power to the scheduler 312, and the scheduler 312 performs power scheduling based on the maximum average power sent by the temperature tracking module 311. In some other embodiments, the scheduler 312 is responsible for calculating the maximum average power. The temperature tracking module 311 sends a real-time temperature of a radio frequency device 322 to the scheduler 312. The scheduler 312 calculates the maximum average power based on the temperature sent by the temperature tracking module 311, and performs scheduling based on the calculated maximum average power.

The following describes a method procedure in embodiments of this application by using examples.

In some embodiments, a maximum transmit power of a radio frequency device is a dynamic parameter, and the maximum transmit power of the radio frequency device may be different in different time periods. For example, each time a time point reaches a start moment of a period of time, a communication device determines a maximum transmit power of the radio frequency device in the period of time based on a predicted temperature of the radio frequency device in the period of time, and performs scheduling control in the period of time based on the determined maximum transmit power. For ease of understanding by a reader, the following uses an example in which the communication device controls the transmit power in the first time period for description. For a processing procedure of the communication device in another time period, refer to the processing procedure in the first time period.

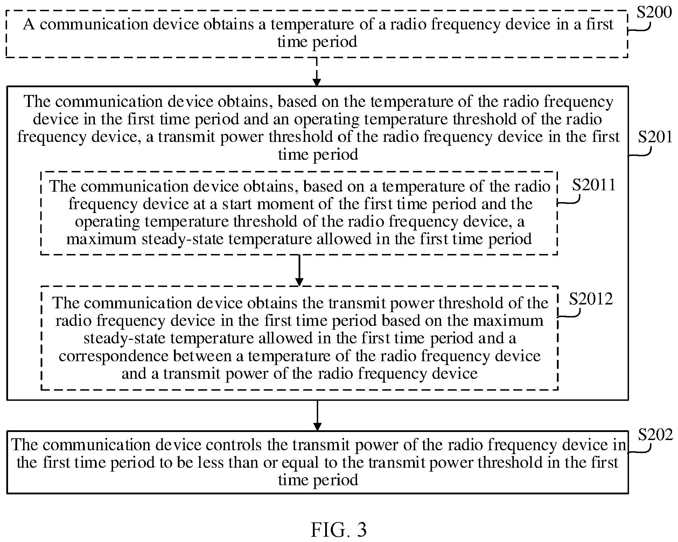

FIG. 3 is a flowchart of a method for controlling a transmit power according to an embodiment of this application. The method shown in FIG. 3 includes the following step S201 and step S202.

A network deployment scenario on which the method shown in FIG. 3 is based is optionally shown in FIG. 1. For example, with reference to FIG. 1, a communication device in the method shown in FIG. 3 is the communication device 11 in FIG. 1, a radio frequency device in the method shown in FIG. 3 is disposed in an RRU or an AAU of the communication device 11, and the method shown in FIG. 3 is used to control a transmit power when the communication device 11 in FIG. 1 transmits a downlink radio frequency signal to a terminal 12 and a terminal 13. Implementation of the method shown in FIG. 3 helps improve a transmit power of the communication device 11. This improves a downlink throughput rate when the communication device 11 performs wireless communication with the terminal 12 and the terminal 13.

The method shown in FIG. 3 is optionally applied to the logical function architecture shown in FIG. 2. For example, the radio frequency device in the method shown in FIG. 3 is the radio frequency device 322 in FIG. 2. Step S201 and step S202 in the method shown in FIG. 3 are performed by a scheduler 312 in a BBU 31.

Step S201: A communication device obtains, based on a temperature of a radio frequency device in a first time period and an operating temperature threshold of the radio frequency device, a transmit power threshold of the radio frequency device in the first time period.

The first time period is one time period. Optionally, the first time period is any time period. Alternatively, the first time period is a time period preset by a user.

Optionally, the temperature of the radio frequency device in the first time period is specifically a temperature of the radio frequency device at a start moment of the first time period. Alternatively, the temperature of the radio frequency device in the first time period is an average value of temperatures of the radio frequency device at all moments in the first time period. In other words, the temperature of the first time period may be an average temperature of the first time period.

An operating temperature threshold refers to a highest operating temperature of the radio frequency device. When the communication device operates, the temperature of the radio frequency device is limited within an operating temperature threshold, to prevent hardware of the radio frequency device from being damaged when the temperature exceeds the operating temperature threshold. In some embodiments, the communication device pre-stores the operating temperature threshold. For example, the communication device stores a product specification file, and the product specification file includes the operating temperature threshold. Optionally, the operating temperature threshold is a constant. Optionally, the operating temperature threshold is a parameter determined during design and manufacturing of the radio frequency device. For example, a value range of an operating temperature of a radio frequency device in an RRU is -40° to 100°, and the operating temperature threshold is, for example, 100°, or one temperature value close to 100°.

The transmit power threshold in the first time period is a maximum transmit power that is allowed to be used by the radio frequency device in the first time period. The transmit power threshold in the first time period is related to the temperature of the radio frequency device in the first time period. For example, the higher the temperature of the radio frequency device in the first time period, the smaller the transmit power threshold in the first time period; and the lower the temperature of the radio frequency device in the first time period, the greater the transmit power threshold in the first time period. In some embodiments, a correlation between the transmit power threshold and the temperature specifically means that the transmit power threshold is related to a temperature difference between the temperature and the operating temperature threshold. For example, the closer the temperature of the radio frequency device in the first time period to the operating temperature threshold, the smaller the transmit power threshold in the first time period. The greater the temperature difference between the temperature of the radio frequency device in the first time period and the operating temperature threshold, the greater the transmit power threshold in the first time period.

Optionally, the transmit power threshold is specifically an average transmit power threshold. An average transmit power in the first time period is an average value of instantaneous transmit powers at a plurality of moments in the first time period. The average transmit power threshold in the first time period is a maximum average transmit power that is allowed to be used by the radio frequency device in the first time period. Alternatively, the transmit power threshold is specifically an instantaneous transmit power threshold. The instantaneous transmit power threshold in the first time period is a maximum instantaneous transmit power allowed by the radio frequency device in the first time period.

In some embodiments, step S201 specifically includes the following step S2011 and step S2012.

Step S2011: A communication device obtains, based on a temperature of a radio frequency device at a start moment of a first time period and an operating temperature threshold of the radio frequency device, a maximum steady-state temperature allowed in the first time period.

For a concept of a steady-state temperature, refer to (5) in the foregoing term introduction.

In some embodiments, the maximum steady-state temperature is related to a temperature difference between the temperature at the start moment and the operating temperature threshold. For example, if the temperature of the radio frequency device at the start moment of the first time period is closer to the operating temperature threshold, to be specific, the temperature difference between the temperature at the start moment and the operating temperature threshold is smaller, the maximum steady-state temperature allowed in the first time period is smaller.

In some embodiments, the maximum steady-state temperature allowed in the first time period is further related to duration required for the radio frequency device to reach the steady-state temperature.

In some embodiments, the maximum steady-state temperature allowed in the first time period is further related to duration of the first time period.

In some embodiments, the maximum steady-state temperature allowed in the first time period is determined through the following Formula (1).

$$T_{Lk}=T_r-Ta+\tau/p*(T_{max}-T_r) \text{ Formula (1)}$$

In the foregoing Formula (1), $T_{Lk}$ represents the maximum steady-state temperature allowed in the first time period. $T_r$ represents a temperature of the radio frequency device at a start moment of the first time period. Ta represents an environment compensation amount. $\tau$ is a time constant. $\tau$ is related to duration required for the radio frequency device to reach the steady-state temperature. Optionally, a specific numerical relationship between $\tau$ and the steady-state temperature is as follows: When a value of the steady-state temperature of the radio frequency device changes from T1 to T2, after the duration $\tau$, a value of the real-time temperature of the radio frequency device changes from T1 to T1+K*(T2-T1). p represents a time length of the first time period, Tmax represents an operating temperature threshold of the radio frequency device, and K is a preset constant. For example, a value of K may be 0.632.

Step S2012: The communication device obtains the transmit power threshold of the radio frequency device in the first time period based on the maximum steady-state temperature allowed in the first time period and a correspondence between a temperature of the radio frequency device and a transmit power of the radio frequency device.

A temperature in the correspondence between the temperature and the transmit power is optionally a steady-state temperature of the radio frequency device.

There are a plurality of possible forms of the correspondence between the temperature and the transmit power. Optionally, a form of the correspondence between the temperature and the transmit power is one function or a group of functions. When performing step S2012, the communication device uses the maximum steady-state temperature as an input parameter of the function, and performs an operation through the function, to obtain a transmit power output by the function. Alternatively, a form of the correspondence between the temperature and the transmit power may be presented in a form of a table. For example, a plurality of groups of temperatures and transmit powers corresponding to the temperatures are stored in the table. For example, when performing step S2012, the communication device queries the table by using the maximum steady-state temperature as an index, to obtain a transmit power corresponding to the maximum steady-state temperature in the table.

There are a plurality of manners for obtaining the correspondence between the temperature and the transmit power. Optionally, in a possible implementation, a steady-state temperature that may be reached by the radio frequency device when the radio frequency device reaches a specific transmit power in a laboratory environment is tested in advance, the correspondence between the temperature and the transmit power is set based on a test result, and the correspondence between the temperature and the transmit power is stored in the communication device.

The foregoing describes a manner of determining the transmit power threshold. The transmit power threshold is determined in this manner, which helps improve accuracy of the transmit power threshold.

Step S202: The communication device controls a transmit power of the radio frequency device in the first time period to be less than or equal to the transmit power threshold in the first time period.

When the transmit power threshold is the average transmit power threshold, step S202 specifically refers to controlling an average transmit power of the radio frequency device in the first time period to be less than or equal to the transmit power threshold in the first time period. In other words, an objective of control of the step is to ensure that an average value of instantaneous transmit powers of the radio frequency device at a plurality of moments in the first time period does not exceed the transmit power threshold, and optionally, allow the instantaneous transmit power of the radio frequency device at a part of moments in the first time period to be greater than the transmit power threshold.

When the transmit power threshold is the instantaneous transmit power threshold, step S202 specifically refers to controlling the instantaneous transmit power of the radio frequency device at each moment in the first time period to be less than or equal to the transmit power threshold in the first time period.

For example, the first time period includes n moments, which are respectively a moment $t_1$, a moment $t_2$, ..., and a moment $t_n$. The average transmit power in the first time period is an average value of n instantaneous transmit powers such as an instantaneous transmit power of the radio frequency device at the moment $t_1$, an instantaneous transmit power of the radio frequency device at the moment $t_2$, ..., and an instantaneous transmit power of the radio frequency device at the moment $t_n$. When the transmit power threshold is the average transmit power threshold, if the average value of the n instantaneous transmit powers is less than or equal to the transmit power threshold, regardless of whether the instantaneous transmit power of the radio frequency device is greater than the transmit power threshold at a part of moments at the n moments, it may be considered that the radio frequency device has implemented that "the transmit power of the radio frequency device in the first time period is less than or equal to the transmit power threshold in the first time period" described in step S202. When the transmit power threshold is the instantaneous transmit power threshold, if each instantaneous transmit power of the radio frequency device in the n instantaneous transmit powers is less than or equal to the transmit power threshold, it may be considered that the radio frequency device implements that "the transmit power of the radio frequency device in the first time period is less than or equal to the transmit power threshold in the first time period" described in step S202.

Step S202 is described above with reference to two types of the transmit power threshold. In this embodiment, whether the control power specifically refers to controlling the average transmit power of the radio frequency device in a period of time or refers to controlling the instantaneous transmit power of the radio frequency device at each moment is not limited. Optionally, the communication device fixedly implements step 5202 in a manner of controlling the average transmit power of the radio frequency device in a period of time, or fixedly implements step 5202 in a manner of controlling the instantaneous transmit power of the radio frequency device at each moment in a period of time. Alternatively, the two actions of controlling the average transmit power of the radio frequency device in a period of time and controlling the instantaneous transmit power of the radio frequency device at each moment are set as two operating modes, and an operating mode to be used is determined based on a configuration of an administrator or is specified by a user. For example, if a requirement on performance is high, an operating mode for controlling the average transmit power of the radio frequency device in a period of time is selected. If radio frequency hardware is sensitive to a temperature or has a strict requirement on hardware security, an operating mode for controlling an instantaneous transmit power of the radio frequency device at each moment is selected.

Step S202 is performed, so that after the first time period, a temperature of the radio frequency device is less than or equal to the operating temperature threshold. This avoids a risk that the radio frequency device is damaged when the temperature exceeds the operating temperature threshold, helps ensure stable operation of the radio frequency device, and improves reliability.

In some embodiments, when controlling the transmit power of the radio frequency device in a period of time, the communication device further divides the period of time into a plurality of scheduling time units, and converts the transmit power threshold of the radio frequency device in the period of time into a transmit power threshold in each scheduling time unit of the radio frequency device in the period of time. In each scheduling time unit, the communication device controls the transmit power of the radio frequency device based on the transmit power threshold corresponding to the current scheduling time unit. In this way, it is ensured that the transmit power of the radio frequency device does not exceed the threshold in the period of time, and power control is more refined. This further improves the transmit power of the radio frequency device.

An example in which the transmit power of the radio frequency device in the first time period is controlled is used. When the transmit power threshold is the average transmit power threshold, the communication device controls an average value of transmit powers of the radio frequency device in the plurality of scheduling time units in the first time period to be less than or equal to the average transmit power threshold in the first time period. For example, the communication device determines the transmit power threshold in each scheduling time unit in the first time period based on the average transmit power in the first time period. In each scheduling time unit in the first time period, the communication device controls the transmit power of the radio frequency device based on the transmit power threshold corresponding to the scheduling time unit, so that the average value of transmit powers of the plurality of scheduling time units in the first time period is less than or equal to the average transmit power threshold in the first time period. For example, a transmit power threshold in each scheduling time unit in the first time period meets the following constraint condition: $P_{max\_tti1}+P_{max\_tti-2}\cdots+P_{max\_tti-n}\leq P_{avg\_max}*n$. $P_{max\_tti-1}$ represents a transmit power threshold in a first scheduling time unit in the first time period, $P_{max\_tti-2}$ represents a transmit power threshold in a second scheduling time unit in the first time period, ... represents a transmit power threshold in a scheduling time unit included in the first time period but not shown, $P_{max\_tti-n}$ represents a transmit power threshold in an $n^{th}$ scheduling time unit in the first time period, $P_{avg\_max}$ represents an average transmit power threshold in the first time period, and n represents a quantity of scheduling time units in the first time period, and n is a positive integer.

The average value is relative to the plurality of scheduling time units, and optionally, the average value of transmit powers of the radio frequency device in the plurality of scheduling time units is equal to a sum of transmit powers of the scheduling time units divided by a quantity of scheduling time units. For a method for calculating the average transmit power threshold in the first time period, refer to descriptions of step S402 in the following example 1.

Because the first time period includes a plurality of scheduling time units, for ease of understanding by a reader and brevity, the following uses a power control manner of a first scheduling time unit in the first time period as an example for a detailed description. The first scheduling time unit is one scheduling time unit in the first time period. Optionally, the first scheduling time unit is a scheduling time unit in which a current time point is located. For a power control manner of another scheduling time unit other than the first scheduling time unit in the first time period by the radio frequency device, refer to the description of the first scheduling time unit. In some embodiments, power control is performed on each scheduling time unit in the first time period in a manner similar to a manner of the first scheduling time unit.

A power control process of the first scheduling time unit includes: The communication device obtains the transmit power threshold in the first scheduling time unit based on the transmit power threshold in the first time period; and the communication device controls a transmit power of the radio frequency device in the first scheduling time unit to be less than or equal to the transmit power threshold in the first scheduling time unit.

When the transmit power threshold is the average transmit power threshold, for example, a manner of obtaining the transmit power threshold in the first scheduling time unit includes: The communication device obtains the transmit power threshold in the first scheduling time unit based on the average transmit power threshold of the radio frequency device in the first time period and transmit powers of one or more scheduling time units that are of the radio frequency device and that are before the first scheduling time unit in the first time period. Specifically, if the transmit power of the radio frequency device in one or more scheduling time units before the first scheduling time unit is greater, to be specific, a transmit power transmitted by the radio frequency device at a historical moment is greater, the transmit power threshold in the first scheduling time unit is smaller.

An example in which the scheduling time unit that is located before the first scheduling time unit in the first time period includes a second scheduling time unit is used. Optionally, a manner of obtaining the transmit power threshold in the first scheduling time unit includes: The communication device determines the transmit power threshold of the radio frequency device in the first scheduling time unit based on an average transmit power threshold in the first time period and a transmit power of the radio frequency device in the second scheduling time unit.

A specific time relationship between the second scheduling time unit and the first scheduling time unit involves a plurality of possible cases. The following describes various possible cases of the second scheduling time unit and the first scheduling time unit by using examples.

Optionally, the second scheduling time unit is adjacent to the first scheduling time unit. In other words, an end moment of the second scheduling time unit is the start moment of the first scheduling time unit. Alternatively, the second scheduling time unit is not adjacent to the first scheduling time unit, and there is a specific slot between the end moment of the second scheduling time unit and the start moment of the first scheduling time unit.

Optionally, the second scheduling time unit is a previous scheduling time unit of the first scheduling time unit in the first time period. Alternatively, the second scheduling time unit and the first scheduling time unit are separated by one or more scheduling time units. For example, the second scheduling time unit is a $TTI_1$, and the first scheduling time unit is a $TTI_3$, where duration of one scheduling time unit is one TTI.

Optionally, all moments of the second scheduling time unit are located before the first scheduling time unit. In other words, on a time axis, the second scheduling time unit does not overlap with the first scheduling time unit. Alternatively, one part of moments of the second scheduling time unit are located before the first scheduling time unit, and the other part of moments of the second scheduling time unit fall within the first scheduling time unit. In other words, on the time axis, the second scheduling time unit overlaps with the first scheduling time unit. For example, the second scheduling time unit is a $TTI_1$ to a $TTI_3$, and the first scheduling time unit is a $TTI_2$ to a $TTI_4$, where duration of one scheduling time unit is three TTIs.

A specific time relationship between the second scheduling time unit and the first scheduling time unit may be designed based on a requirement. This is not limited in this embodiment.

The transmit power threshold in the first scheduling time unit is negatively correlated with a value of the transmit power of the radio frequency device in the second scheduling time unit. The negative correlation refers to an inverse proportion relationship. In other words, a value of the transmit power of the radio frequency device in the second scheduling time unit affects the transmit power threshold in the first scheduling time unit. The greater the value of the transmit power of the radio frequency device in the second scheduling time unit, the smaller the transmit power threshold in the first scheduling time unit.

For example, the value of the transmit power of the radio frequency device in the second scheduling time unit and the transmit power threshold in the first scheduling time unit meet the following constraint condition: $P_{max\_last\_tti}+P_{max\_tti} \leq P_{avg\_max}*n$. $P_{max\_last\_tti}$ represents a value of a transmit power of the radio frequency device in the second scheduling time unit, $P_{max\_tti}$ represents a transmit power threshold in the first scheduling time unit, $P_{avg\_max}$ represents an average transmit power threshold, and n represents a quantity of scheduling time units in the first time period, and n is a positive integer. In this implementation, it is ensured that the average transmit power does not exceed the threshold, and a specific transmit power threshold in a scheduling time unit is allowed to float with a used transmit power. This helps the transmit power threshold change with a service requirement, and further helps improve the transmit power of the radio frequency device.

For example, when the transmit power of the radio frequency device in the second scheduling time unit is greater than the average transmit power threshold in the first time period, the transmit power of the radio frequency device in the first scheduling time unit is optionally less than the average transmit power threshold in the first time period. When the transmit power of the radio frequency device in the second scheduling time unit is less than the average transmit power threshold, the transmit power of the radio frequency device in the first scheduling time unit is optionally greater than the average transmit power threshold in the first time period.

The foregoing described related features of the first scheduling time unit and the second scheduling time unit may be used to implement how to determine, based on an actual transmit power (the transmit power of the radio frequency device in the second scheduling time unit) of the radio frequency device in a previous scheduling time unit, a maximum power (the transmit power threshold of the radio frequency device in the first scheduling time unit) allowed by the current scheduling time unit. In some other embodiments, the communication device determines, based on the actual transmit power of the radio frequency device in the plurality of previous scheduling time units, a maximum transmit power allowed in a current scheduling time unit. The following uses an example for description.

The following provides a description by using an example in which the second scheduling time unit and the third scheduling time unit exist before the first scheduling time unit. The first scheduling time unit, the second scheduling time unit, and the third scheduling time unit all belong to the first time period.

For example, a manner of obtaining the transmit power threshold in the first scheduling time unit includes: The communication device obtains a sum of transmit powers of the radio frequency device in the second scheduling time unit and the third scheduling time unit; and the communication device determines a transmit power threshold in the first scheduling time unit based on the average transmit power threshold in the first time period and the sum of transmit powers.

The sum of transmit powers of the radio frequency device in the second scheduling time unit and the third scheduling time unit represents a total number of powers sent by the radio frequency device in the second scheduling time unit and the third scheduling time unit. The sum of transmit powers is a sum of transmit powers such as a transmit power of the radio frequency device in the second scheduling time unit and a transmit power of the radio frequency device in the third scheduling time unit.

The transmit power threshold in the first scheduling time unit is negatively correlated with a value of the sum of transmit powers. In other words, the greater the powers transmitted by the radio frequency device in the second scheduling time unit and the third scheduling time unit in total, the smaller the transmit power threshold in the first scheduling time unit. For example, a sum of transmit powers of the radio frequency device in the second scheduling time unit and the third scheduling time unit and a transmit power threshold in the first scheduling time unit meet the following constraint condition: $P_{max\_last\_last\_tti}+P_{max\_last\_tti}+P_{max\_tti} \leq P_{avg\,max}*n$. $P_{max\_last\_last\_tti}$ represents the transmit power of the radio frequency device in the third scheduling time unit, $P_{max\_last\_tti}$ represents the transmit power of the radio frequency device in the second scheduling time unit, $P_{max\_last\_last\_tti}+P_{max\_last\_tti}$ represents the sum of transmit powers of the radio frequency device in the second scheduling time unit and the third scheduling time unit, $P_{avg\_max}$ represents the average transmit power threshold in the first time period, and n represents the quantity of scheduling time units in the first time period, and n is a positive integer.

The foregoing describes how to determine the transmit power threshold of the radio frequency device in the first scheduling time unit based on transmit powers of the radio frequency device in the previous two scheduling time units by using two scheduling time units, namely, the second scheduling time unit and the third scheduling time unit, as an example. A case that there are two scheduling time units before the first scheduling time unit is merely an example. Optionally, there are more than two scheduling time units before the first scheduling time unit in the first time period. For example, there are not only the second scheduling time unit and the third scheduling time unit but also the fourth scheduling time unit, the fifth scheduling time unit, or more scheduling time units before the first scheduling time unit. Optionally, the communication device determines the transmit power threshold of the radio frequency device in the first scheduling time unit based on a sum of transmit powers of the radio frequency device in more scheduling time units. For example, the communication device determines the transmit power of the radio frequency device in the first scheduling time unit based on the average transmit power threshold of the radio frequency device in the first time period and the sum of transmit powers of the radio frequency device in all scheduling time units before the first scheduling time unit in the first time period. In some embodiments, the communication device accumulates a sum of transmit powers of all scheduling time units that have been used in the first time period. For example, each time reaching an end moment of one scheduling time unit, the communication device adds the transmit power of the radio frequency device in the scheduling time unit to a historical accumulation result, so that the accumulation result includes the transmit power of the radio frequency device in the scheduling time unit and the transmit power of the radio frequency device at a historical moment before the scheduling time unit. Then, the communication device determines a transmit power threshold in a next scheduling time unit based on the updated accumulation result.

In some embodiments, a function of a minimum power is implemented by setting a base power. The following uses the base power as an example for description.

The base power is a minimum power allowed to be transmitted by the radio frequency device in one scheduling time unit. The base power may also be referred to as a minimum power. The base power is greater than or equal to 0. A value of the base power is less than the average power threshold. A specific value of the base power may be set based on an experiment, experience, or a requirement. The value of the base power is not limited in this embodiment.

When the base power is introduced, the transmit power of the radio frequency device in the first scheduling time unit meets, for example, the following constraint condition:

$$P_{base} \leq P_{max\_tti-i} \leq P_{avg\_max}*n - P_{base}*(n-i) - (P_{max\_tti-1}+P_{max\_tti-2}\ldots+P_{max\_tti-i-1}).$$

$P_{base}$ represents the base power, $P_{max\_tti-1}$ represents the transmit power threshold of the radio frequency device in the first scheduling time unit, $P_{avg\_max}$ represents the average transmit power threshold, n represents the quantity of scheduling time units in the first time period, (n-i) represents the quantity of scheduling time units after the first scheduling time unit in the first time period, and $(P_{max\_tti-1}+P_{max\_tti-2}\cdots+P_{max\_tti-i-1})$ represents a sum of transmit powers of the radio frequency device in all scheduling time units before the first scheduling time unit in the first time period, n and i are positive integers, and i is less than or equal to n.

For example, duration of the first time period is 1s. Duration of one scheduling time unit is 1 ms, to be specific, the first time period includes 1000 scheduling time units in total. The average transmit power threshold in the first time period is 80 W. The base power is 20 W. An example in which the first scheduling time unit is the 700th ms in 1s. There are 300 ms left after the first scheduling time unit in the first time period. To be specific, a quantity of scheduling time units after the first scheduling time unit in the first time period is 300, and all scheduling time units before the first scheduling time unit are 699 ms before the 700th ms in 1s. If a total of 20000 W has been transmitted by the radio frequency device in the 699 ms, a sum of transmit powers in the foregoing constraint condition is 20000 W, the constraint condition that the transmit power of the radio frequency device in the first scheduling time unit meets is specifically as follows: $20 \leq P_{max\_tti-i} \leq 80*1000-20*300-20000$, where $P_{max\_tti-i}$ represents the transmit power threshold in the first scheduling time unit.

Optionally, each scheduling time unit in the first time period meets the foregoing constraint conditions related to the base power. Alternatively, a part of scheduling time units in the first time period meet the foregoing constraint conditions related to the base power.

The following analyzes and describes a principle of implementing a function of a minimum power by using the base power.

When the base power is not introduced, because the radio frequency device has transmitted too many powers in a previous scheduling time unit, a transmit power threshold of the radio frequency device in a subsequent scheduling time unit may only be 0, to ensure that the average transmit power does not exceed the threshold. However, that the transmit power threshold of the radio frequency device in the subsequent scheduling time unit is 0 means that the radio frequency device is no longer allowed to send a power in the subsequent scheduling time unit. Therefore, when the radio frequency device needs to send high-priority service data in the subsequent scheduling time unit, a service may be severely damaged. The high-priority service data refers to service data that needs to be immediately scheduled. For example, the high-priority service data is control signaling. However, in the foregoing implementation, the base power is introduced into a process of determining the power threshold, and the communication device restricts the transmit power threshold of the radio frequency device in each scheduling time unit by using the base power and the average transmit power threshold. Therefore, when the power threshold of the radio frequency device in each scheduling time unit is determined, a margin is reserved for the power threshold of the radio frequency device in a subsequent scheduling time unit, so that the radio frequency device may obtain at least the base power in the power threshold in the subsequent scheduling time unit. In this way, a case that the radio frequency device does not have a transmit power in a subsequent scheduling time unit due to an excessive power transmitted by the radio frequency device in a previous scheduling time unit is avoided, so that power allocation is more even, and a minimum power is implemented.

Control of a transmit power includes a plurality of implementations. The following describes two control manners by using examples. For details, refer to the following control manner 1 and control manner 2.

Control manner 1: The communication device adjusts a bandwidth occupied by data sent by a radio frequency device on a data channel.

Because a value of the transmit power is related to a value of an occupied bandwidth, after the communication device adjusts the value of the occupied bandwidth, the value of the transmit power changes accordingly. Therefore, the transmit power may be adjusted by adjusting the bandwidth. Specifically, the communication device may increase the transmit power of the radio frequency device by increasing the bandwidth occupied by the data on the data channel. The communication device may reduce the transmit power of the radio frequency device by reducing the bandwidth occupied by the data on the data channel.

The data channel is a channel used to carry service data of a user. The data channel is, for example, a PDSCH. Optionally, in a process of controlling the transmit power, the communication device adjusts the bandwidth occupied by the service data on the data channel, and keeps the bandwidth occupied by the control data on the control channel unchanged.

In some embodiments, a specific implementation process of the control manner 1 includes: The communication device first determines a target transmit power of the radio frequency device, then determines a target bandwidth based on the target transmit power and an available bandwidth of the data channel, and then sends data on the data channel based on the target bandwidth, so that the transmit power of the radio frequency device is the target transmit power.

The available bandwidth of the data channel is a maximum value of the bandwidth allowed to be occupied on the data channel. Optionally, the available bandwidth of the data channel is a preset configuration parameter. For example, if the available bandwidth is 20 MHz, when sending data to a terminal, the communication device occupies a bandwidth of 20 MHz at most on the data channel.

The target bandwidth is less than or equal to the available bandwidth of the data channel. Optionally, the target bandwidth is a ratio of the target transmit power to a power spectral density. A value of the target bandwidth may be represented by a quantity of used RBs. Specifically, the greater the quantity of RBs used when the communication device sends data, the larger the bandwidth occupied by the data on the data channel. Bandwidth adjustment by the communication device is specifically implemented by adjusting the quantity of used RBs.

In some embodiments, a specific implementation process of the control manner 1 includes: The communication device first determines a target transmit power of the radio frequency device, then determines a quantity of to-be-used RBs based on the target transmit power, and sends data by using the quantity of RBs, so that a bandwidth occupied by the data on the data channel is the target bandwidth, and the transmit power of the radio frequency device is the target transmit power.

The quantity of RBs is related to the target transmit power and the power spectral density. For example, the quantity of RBs is a ratio of the target transmit power to the power spectral density. For example, in an LTE cell, an available bandwidth is 20 MHz, and the bandwidth of 20 MHz includes 100 RBs. In other words, the communication device may send data by using a maximum of 100 RBs. An example in which the power spectral density is a power of 1 W transmitted on one RB is used. If the target transmit power is 80 W, the communication device determines that the quantity of RBs is 80 W/1 (W/RB)=80 RBs, and the communication device sends data by using 80 RBs. If the target transmit power is 50 W, the communication device determines that the quantity of RBs is 50/1=50, and the communication device sends data by using 50 RBs.

Control manner 2: The communication device adjusts a power spectral density of the radio frequency device.

Because the value of the transmit power is related to the power spectral density, after the communication device adjusts the value of the power spectral density, the value of the transmit power changes accordingly. Therefore, the transmit power may be adjusted by adjusting the power spectral density. Specifically, the communication device may increase the transmit power of the radio frequency device by increasing the power spectral density of the radio frequency device. The communication device may reduce the transmit power of the radio frequency device by reducing the power spectral density of the radio frequency device.

In some embodiments, a specific implementation process of the control manner 2 includes: The communication device first determines a target transmit power of the radio frequency device, then determines a target power spectral density based on the target transmit power, and then sends data based on the target power spectral density, so that the transmit power of the radio frequency device is the target transmit power, and the transmit power of the radio frequency device is the target transmit power.

The target power spectral density is related to the target transmit power and the bandwidth occupied on the data channel. For example, the target power spectral density is a ratio of the target transmit power to the bandwidth. For example, the communication device occupies the bandwidth of 20 MHz on the data channel, to be specific, sends data by using 100 RBs. If the target transmit power is 50 W, the communication device determines that a value of the target power spectral density is 50/100=0.5. In other words, the communication device transmits a power of 0.5 W on each RB.

The foregoing describes two control manners of the transmit power. In the two control manners, an objective that the transmit power may be controlled to meet a requirement may be implemented, and the transmit power may change rapidly in a short period of time, and timeliness is good. One of the two control manners is optionally selected for use, or the two control manners are combined for use. Alternatively, other means other than the two control manners are used to control the transmit power, for example, control the transmit power by reducing a gain of the radio frequency device, disabling a part of transmit channels or a part of subcarriers, or migrating a user to another RRU. This embodiment does not limit how to specifically control the transmit power.

In some embodiments, the communication device periodically controls the transmit power of the radio frequency device. Each time reaching a start moment of one time periodicity, the communication device obtains a transmit power threshold of a current time periodicity based on a current temperature of the radio frequency device, and then controls, in the current time periodicity, the transmit power of the radio frequency device to be less than or equal to the transmit power threshold of the radio frequency device in the current time periodicity.

The periodic control includes but is not limited to a window hopping filtering manner and a sliding window filtering manner. The window is one time periodicity, which is also referred to as one time window. In the window hopping filtering manner, a time difference between start moments of two adjacent time periodicities is equal to duration of one time periodicity. For example, duration of one time periodicity is 1s, a first time periodicity is 1s, a second time periodicity is 2s, a third time periodicity is 3s, and the rest is deduced by analogy. In the sliding window filtering manner, a time difference between start moments of two adjacent time periodicities is duration of one or more scheduling time units. For example, duration of one time periodicity is 1s, duration of one scheduling time unit is 1 ms, a first time periodicity is 1s, a second time periodicity is 1.001s, a third time periodicity is 1.002s, and the rest is deduced by analogy.

When the periodic control manner is used, the first time periodicity in the method shown in FIG. 3 is, for example, one time periodicity, and duration of the first time periodicity is, for example, equal to duration of one time periodicity. When a time point reaches a next time periodicity of the first time period, the communication device controls the transmit power of the radio frequency device in a similar manner.

An example in which a next time periodicity of the first time period is a second time period is used. The method shown in FIG. 3 further includes: The communication device obtains, based on a temperature of a radio frequency device in a second time period and an operating temperature threshold of the radio frequency device, a transmit power threshold of the radio frequency device in the second time period; and controls a transmit power of the radio frequency device in the second time period to be less than or equal to the transmit power threshold in the second time period.

The second time period is after the first time period. For example, when the window hopping filtering manner is used, there is a length of one time periodicity between the start moment of the second time period and the start moment of the first time period. When the sliding window filtering manner is used, there is duration of one or more scheduling time units between the start moment of the second time period and the start moment of the first time period.

Whether the window hopping filtering manner or the sliding window filtering manner is specifically used may be set as required, which is not limited in this embodiment.

According to the method provided in this embodiment, the baseband unit is used as an example. The baseband unit determines the transmit power threshold based on the temperature of the radio frequency device, and the transmit power threshold of the radio frequency device is allowed to dynamically change with a real-time temperature of the radio frequency device. Therefore, a limitation of the transmit power threshold on a hardware capability of the radio frequency device is reduced. This helps further improve the transmit power of the radio frequency device and avoid overheat of the radio frequency device, and improves performance of the communication device.

In some embodiments, before step S201, the method shown in FIG. 3 further includes the following step S200. Step 5200 is an optional step, and step 5200 may not be performed. Optionally, step S200 is cooperatively performed by the temperature tracking module 311 in the BBU 31 and the temperature detection module 321 in the radio frequency module 32 in FIG. 2.

Step S200: A communication device obtains a temperature of a radio frequency device in a first time period.

There are a plurality of implementations for obtaining the temperature of the radio frequency device. The following uses an implementation A and an implementation B as an example for description. The implementation A and the implementation B are two parallel manners, and the communication device may select one of the two manners to obtain the temperature of the radio frequency device.

Implementation A: The communication device predicts the temperature of the radio frequency device through a temperature model.

Optionally, the temperature model is used to predict the temperature of the radio frequency device based on load of the radio frequency device, to be specific, predict a degree to which the temperature of the radio frequency device will reach when the radio frequency device operates under load. An input parameter of the temperature model includes the load of the radio frequency device. An output parameter of the temperature model includes the temperature. When performing step 5200, the communication device predicts a temperature of the radio frequency device in the first time period based on load of the radio frequency device in the first time period and the temperature model. Specifically, a form of the temperature model is, for example, one function or a group of functions. The communication device inputs the load in the first time period into the temperature model, and performs an operation through the temperature model, to obtain the temperature output by the temperature model.

Alternatively, the temperature model is used to predict a temperature variation amount of the radio frequency device based on the load of the radio frequency device. In other words, when the radio frequency device operates under load, the temperature of the radio frequency device increases by a degree or decreases by a degree. An input parameter of the temperature model includes the load of the radio frequency device. An output parameter of the temperature model includes the temperature variation amount. When performing step 5200, the communication device predicts a temperature variation amount of the radio frequency device in the first time period based on the load of the radio frequency device in the first time period and the temperature model; and determining the temperature of the radio frequency device in the first time period based on the temperature of the radio frequency device at the start moment of the first time period and the temperature variation amount.

In some embodiments, the load used in predicting the temperature is described by a transmit power. Optionally, a value of the load is a ratio of the transmit power of the radio frequency device to the average transmit power threshold. Optionally, a form of the load is one percentage. For example, if the average transmit power threshold is 100 W, and the average power actually transmitted by the radio frequency device at a TTI is 50 W, the load used during power prediction is 50 W/100 W=50%.

Implementation B: The communication device detects the temperature of the radio frequency device through a temperature sensor.

Specifically, the RRU or the AAU in which the radio frequency device is located includes the temperature sensor. The RRU or the AAU detects the temperature of the radio frequency device through the temperature sensor, the RRU or the AAU sends the detected temperature to the BBU, and the BBU receives the temperature sent by the RRU or the AAU.

In some embodiments, the temperature model in the foregoing implementation A includes an environment compensation amount. The following describes a function of the environment compensation amount, an implementation of obtaining the environment compensation amount, and how to apply the environment compensation amount.

The environment compensation amount is used to compensate for impact caused by an environment in which the radio frequency device is located on the temperature of the radio frequency device. Specifically, some data (for example, a quantity relationship between a temperature and a downlink load) used in the temperature model is usually obtained through a test in a laboratory environment. When the radio frequency device is installed on a communication device (for example, a base station site) on a live network for use, an environment in which the radio frequency device is located is usually different from the laboratory environment. For example, many parameters such as temperature, humidity, a wind direction, a wind speed, and sunlight radiation intensity of the environment in which the radio frequency device is located may be different from those in the laboratory environment. Therefore, under the same downlink load, an actual temperature of the radio frequency module usually deviates from the temperature tested in the laboratory. For example, under the same transmit power, the temperature of the radio frequency device in a high-temperature environment is generally higher than the temperature of the radio frequency device in a low-temperature environment. However, in this embodiment, the environment compensation amount is introduced into the temperature model, so that impact caused by the environment may be compensated for through the environment compensation amount. This reduces an error caused by the environment, and improves accuracy of predicting a temperature by using the temperature model.

There are a plurality of implementations for obtaining the environment compensation amount. Optionally, an RRU or an AAU including the radio frequency device detects the temperature of the radio frequency device through a temperature sensor, and the communication device obtains the environment compensation amount based on the temperature detected by the RRU or the AAU and the temperature predicted through the temperature model. For example, the temperature model predicts that a temperature of the radio frequency device at a time point is 25°, and the RRU or the AAU detects that the temperature of the radio frequency device at the time point is 30°, and reports 30° to the BBU. In this case, the BBU determines the temperature compensation amount by using a temperature difference of 5° between 25° and 30°.

In some embodiments, the environment compensation amount is positively correlated with a temperature difference between the temperature detected by the RRU or the AAU and the temperature predicted through the temperature model. In other words, the greater the deviation between the temperature predicted by the temperature model and the temperature detected by the RRU or the AAU, the greater the environment compensation amount.

In some embodiments, the environment compensation amount is specifically determined through the following Formula (2).

$$Ta=(T_{PA0}-T_n)*\tau/I \quad \text{Formula (2)}$$

In the foregoing Formula (2), Ta represents the environment compensation amount, $T_{PA0}$ represents the temperature of the radio frequency device detected by the RRU or the AAU at the end moment of the first time period, Tn represents the temperature that is of the radio frequency device at the end moment of the first time period and that is predicted through the temperature model, $\tau$ is a time constant, and $\tau$ is related to duration required for the radio frequency device to reach a steady-state temperature. For a numerical relationship between $\tau$ and the steady-state temperature, refer to the foregoing description of Formula (1). I represents a time length of the first time period.

Alternatively, a plurality of sensors are disposed in the communication device, for example, a sensor for detecting an ambient temperature, a sensor for detecting a wind speed and a wind direction, a sensor for detecting humidity, and the like. The communication device collects, through the plurality of sensors, a parameter of an environment in which the radio frequency device is located, and determines an environment compensation amount based on the collected environment parameter. Alternatively, the communication device invokes an interface provided by a weather server, the weather server sends the environment parameter to the communication device, and the communication device determines the environment compensation amount based on the environment parameter provided by the weather server.

The foregoing implementations of obtaining the environment compensation amount are all examples for description. How to obtain the environment compensation amount is not limited in this embodiment.

The environment compensation amount is, for example, used to correct a temperature model. Specifically, after obtaining the environment compensation amount in any one of the foregoing manners, the communication device updates the environment compensation amount in the temperature model to the obtained environment compensation amount, so that the temperature predicted by the updated temperature model is consistent with the current actual temperature of the radio frequency device. In this way, impact of the environment on accuracy of the temperature model is compensated, and the temperature model is corrected.

Optionally, a process of correcting the temperature model by using the environment compensation amount is performed periodically. Specifically, the communication device obtains the environment compensation amount based on a set time periodicity, and updates the environment compensation amount in the temperature model to the obtained environment compensation amount. Alternatively, correction of the temperature model is performed when a set trigger condition is met. For example, the communication device corrects the temperature model when receiving an instruction of a controller or an administrator; for another example, the communication device corrects the temperature model when being powered on and initialized; or for another example, the communication device corrects the temperature model when detecting that a deployment location changes. An occasion for correcting the temperature model is not limited in this embodiment.

In some embodiments, the temperature model is established based on the following Formula (3):

$$T_n = T_{n-1} + (T_{Ln} + T - T_{n-1}) * q_n / \tau \text{ Formula (3)}$$

In Formula (3), $T_n$ represents a temperature of the radio frequency device after a scheduling time unit n in the first time period, $T_{n-1}$ represents a temperature of the radio frequency device after a scheduling time unit (n-1) in the first time period, $L_n$ represents load of the radio frequency device in an $n^{th}$ scheduling time unit in the first time period, $T_{Ln}$ represents a steady-state temperature reached by the radio frequency device when load is $L_n$, T represents an environment compensation amount, and $\tau$ is a time constant. For a numerical relationship between $\tau$ and the steady-state temperature, refer to the foregoing description of Formula (1). $q_n$ represents duration of the scheduling time unit n. n represents a sequence number of the scheduling time unit, n is a positive integer, and a maximum value of n is a quantity of scheduling time units included in the first time period. A first scheduling time unit is a scheduling time unit 1, and a last scheduling time unit is the scheduling time unit n. When a value of n is 1, n-1 represents a start moment of the first time period. For example, T0 represents a temperature of the radio frequency device at the start moment of the first time period. One scheduling time unit includes one or more TTIs.

The following describes a method procedure based on the architecture shown in FIG. 2 with reference to an example. The following example 1 is an example of the method shown in FIG. 3.

Example 1

First, a relationship between features in the method shown in FIG. 3 and the example 1 is described.

The power amplifier (PA) in the following example 1 is an example description of the radio frequency device in the method shown in FIG. 3. The periodicity I in the following example 1 is an example description of the first time period in the method shown in FIG. 3. The TTI (1 ms) in the following example 1 is an example description of the scheduling time unit in the method shown in FIG. 3. The real-time temperature of the power amplifier in the following example 1 is an example description of the temperature of the radio frequency device in the first time period in the method shown in FIG. 3. A maximum allowable operating temperature of the power amplifier in the following example 1 is an example description of the operating temperature threshold of the radio frequency device in the method shown in FIG. 3. A maximum average power in the following example 1 is an example description of a transmit power threshold of the radio frequency device in the first time period in the method shown in FIG. 3. In the following example 1, the transmit power used by the power amplifier at a previous TTI is an example description of the transmit power of the radio frequency device in the second scheduling time unit in the method shown in FIG. 3. In the following example 1, a maximum power that is allowed to be used by the power amplifier at a current TTI is an example description of a transmit power threshold of the radio frequency device in the first scheduling time unit in the method shown in FIG. 3. The temperature of the power amplifier at the start moment of the periodicity in the following example 1 is an example description of the temperature of the radio frequency device at the start moment of the first time period in the method shown in FIG. 3. The maximum steady-state temperature in the following example 1 is an example description of a maximum steady-state temperature allowed in the first time period in the method shown in FIG. 3.

In subscripts of the parameters in the example 1, max indicates a maximum value, avg indicates average value (average), Lk indicates load in a $k^{th}$ periodicity, and base indicates basis.

The following briefly describes an overall process of the example 1.

The temperature detection module 321 in the radio frequency module 32 detects a temperature of the radio frequency device 322. The temperature detection module 321 reports the detected temperature to the BBU 31 at intervals of a set time periodicity. The temperature tracking module 311 in the BBU 31 corrects the temperature model by using the temperature reported by the radio frequency module 32. The temperature tracking module 311 calculates, based on the temperature predicted by the temperature model and using a maximum operating temperature allowed by the temperature tracking module 311 as a limit, the maximum average power $P_{avg\_max}$ allowed to be transmitted by the power amplifier, and notifies a scheduler 312 of the maximum average power $P_{avg\_max}$. The scheduler 312 completes scheduling of a downlink user, and schedules a transmit power of data or a signal of the downlink user to achieve a high throughput rate on the premise that the maximum average power $P_{avg\_max}$ is not exceeded. The scheduling data or signal of the downlink user completed by the scheduler 312 is sent to the RRU, and the RRU converts the scheduling data or signal into a high-power radio frequency signal, and transmits the radio frequency signal from an antenna 33.

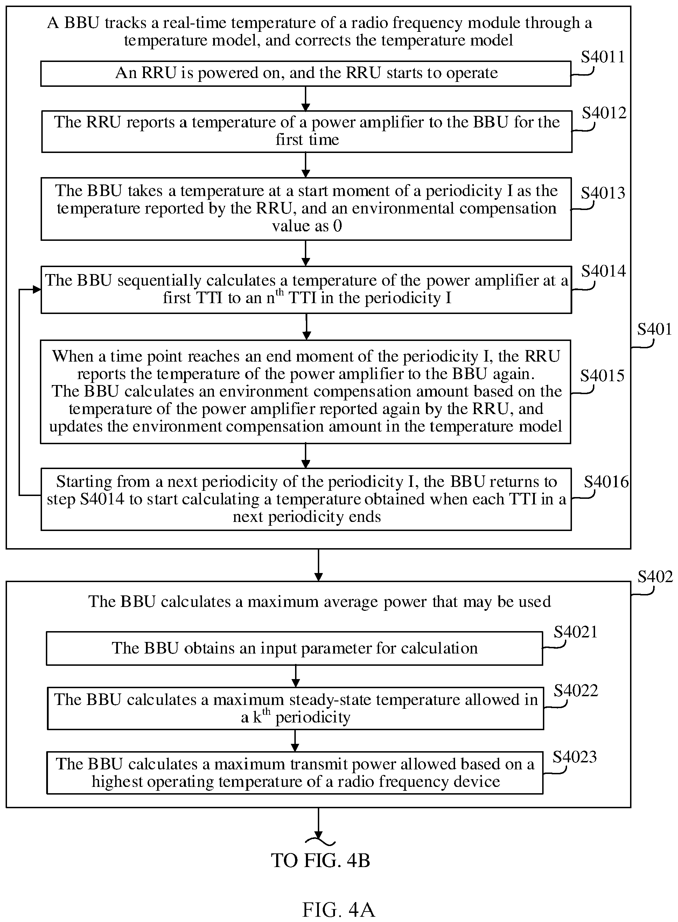

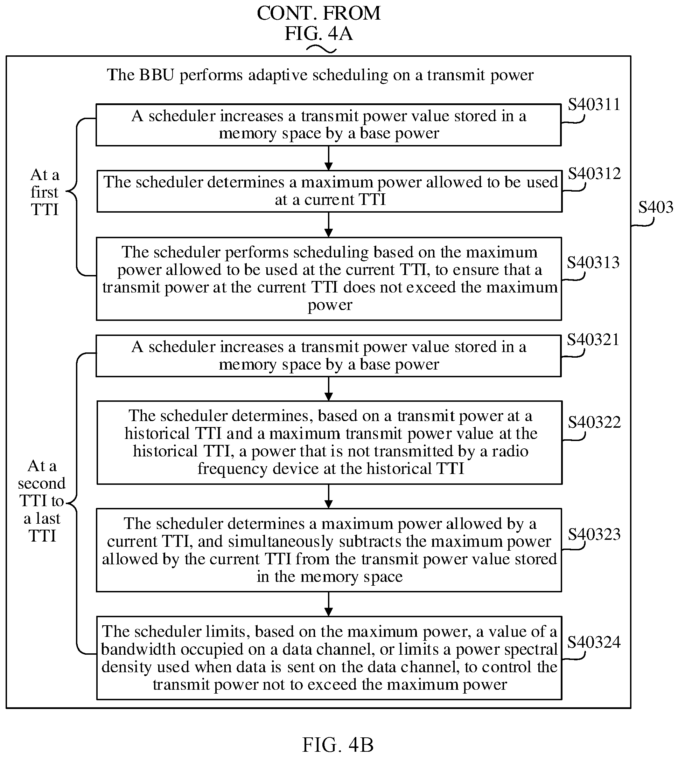

Specifically, FIG. 4A and FIG. 4B are flowcharts of the example 1. The example 1 includes step S401 to step S403.

Step S401: A BBU tracks a real-time temperature of a radio frequency module through a temperature model, and corrects the temperature model. For step S401, refer to the description of step 5200 in FIG. 3.

In a time periodicity I (for example, 1 minute) established by the BBU, a relationship between a temperature of a radio frequency device and a transmit power scheduled at each TTI is shown in the following Formula (4). The following Formula (4) is a specific form of Formula (3) described above.... represents that Formula (4) includes and omits formulas of $T_2$ and $T_3$ to $T_{n-1}$ that are not shown.

$$T_1 = T_0 + (T_{L1} + T - T_0) * q_1/\tau;$$

$$\cdots$$

$$T_n = T_{n-1} + (T_{Ln} + T - T_{n-1}) * q_n/\tau \quad \text{Formula (4)}$$

Meanings of the parameters in Formula (4) are as follows.

$T_0$ represents a temperature of a radio frequency device at a start moment of the periodicity.

$T_1$ represents a temperature of the radio frequency device after a first TTI, and $q_1$ represents duration of a scheduling time unit 1.

$T_n$ represents a temperature of the radio frequency module after an $n^{th}$ TTI, and $q_n$ represents duration of a scheduling time unit n.

$T_{Ln}$ represents a steady-state temperature that the radio frequency device reaches under load Ln when a downlink load of the $n^{th}$ TTI is Ln.

Ta represents an environment compensation amount. Ta remains unchanged in the entire periodicity.

$\tau$ represents a time constant of a radio frequency module. For a numerical relationship between $\tau$ and the steady-state temperature, refer to the foregoing description of Formula (1). For a specific type of the radio frequency module, a value of $\tau$ is fixed.

An initial value of $T_0$ is reported by the radio frequency module. When an RRU or AAU starts to operate and does not report a temperature of the BBU, $T_0$ does not have a value. When the RRU or AAU reports a device temperature to the BBU for the first time, a value of $T_0$ is a value reported by the RRU or AAU.

Li is a downlink load actually scheduled at a first TTI. The load is one percentage. A value is obtained by using the following formula: $L_1$ = Average downlink actual transmit power/Maximum average transmit power allowed by the radio frequency module. For example, the maximum average power allowed to be transmitted by an RRU is 100 W, but the average power actually transmitted by the RRU at a TTI is 50 W. $L_1$ = 50 W/100 W = 50%. $T_{L1}$ is a steady-state temperature of an internal device of the radio frequency module when the radio frequency module maintains the downlink load to be $L_1$. It takes a long period of time (compared with duration of one TTI) for the internal device of the radio frequency module to reach the steady-state temperature under a specific load. The duration is represented by the time constant $\tau$.

Ta is a compensation amount.

The following describes a specific process of temperature tracking and correction in step S401 by using an example in which the radio frequency module is an RRU and the radio frequency device inside the radio frequency module is the power amplifier. Steps performed by other radio frequency devices except the power amplifier are similar. Step 5401 specifically includes the following step S4011 to step S4016.

Step S4011: An RRU is powered on, and the RRU starts to operate.

Step S4012: The RRU reports a temperature $T_{PA0}$ of a power amplifier to a BBU for the first time.

Step S4013: The BBU sets a temperature $T_0$ at a start moment of a periodicity I to $T_{PA0}$, and sets the environment compensation amount Ta to 0.

Step S4014: The BBU sequentially calculates a temperature of the power amplifier at a first TTI to an $n^{th}$ TTI in the periodicity I, namely, $T_1$, $T_2$, ..., $T_n$, based on Formula (4) by using a time constant $\tau$, a correspondence between load and a steady-state temperature obtained by the RRU of the model through a laboratory test in advance.

The relationship between the load of the RRU and the steady-state temperature is obtained in the laboratory in advance. A relationship between the steady-state temperature $T_L$ and load L is a function relationship, namely, $T_L = f(L)$.

Step S4015: When a time point reaches an end moment of the periodicity I, the RRU reports a temperature $T_{PA0}$ of the power amplifier to the BBU again. The BBU calculates the environment compensation amount Ta based on the temperature $T_{PA0}$ of the power amplifier reported by the RRU again and a relation formula Ta = $(T_{PA0} - n) * \tau/I$. The BBU updates Ta in the temperature model based on the calculated Ta.

Using execution by a scheduler in a baseband unit as an example, the scheduler periodically calculates the environment compensation amount Ta and updates the environment compensation amount Ta in the temperature model, to perform periodic compensation on a change of an external environment condition (including a temperature, humidity, a wind speed, and light) of the radio frequency module. This avoids impact of the environment condition. After the impact of the environment condition is compensated for, the temperature model converts downlink scheduling per millisecond and a transmit power into temperature changes and traces the temperature changes of the radio frequency module in real time.

Step S4016: Starting from a next periodicity of the periodicity I, the BBU re-performs step S4014 to start calculating a temperature obtained when each TTI ends in a next periodicity.

For different types of RRUs, a function relationship between the steady-state temperature $T_L$ and the load L may be different. For example, in some RRUs, transmit powers of all power amplifiers are the same at each moment. In this way, one load variable L may represent loads of all power amplifiers, and $T_L=f(L)$. However, the loads of different power amplifiers in some RRUs may be different. In this case, a function relationship between the steady-state temperature TL and the load L needs to be described through a plurality of different load variables, namely, $T_L=f(L_1, L_2, ..., L_n)$. $L_1, L_2, ..., L_n$ represent different loads on n power amplifiers. Further, temperatures of different power amplifiers in the RRU may also be different, and need to be described through different functions. Therefore, a complete function relationship between the temperatures of the n power amplifiers and the load is described as follows:

$$T_{L1}=f1(L_1, L_2, ..., L_n) \text{ Formula (5)}$$

$$T_{L2}=f2(L_1, L_2, ..., L_n) \text{ Formula (6)}$$

...

$$T_{Ln}=fn(L_1, L_2, ..., L_n) \text{ Formula (7)}$$

In summary, in step S401, through collaboration between the RRU and the BBU and a temperature model inside the BBU, continuous tracking of a real-time temperature of a key device (typically a power amplifier) inside the RRU is implemented. Through tracking of the real-time temperature, the BBU may accurately obtain the real-time temperature of the RRU at each moment, and may accurately predict a relationship between a subsequent temperature change and load, to obtain, through calculation, a maximum average transmit power allowed by a radio frequency device (such as a power amplifier) in each control periodicity without exceeding a temperature upper limit.

Step S402: The BBU calculates a maximum average power $P_{avg\_max}$ of the power amplifier.

For step S402, refer to the description of step S201 in FIG. 3.

The maximum average power $P_{avg\_max}$ of the power amplifier represents the maximum average power allowed by the power amplifier at a current temperature in one time periodicity. The maximum average power $P_{avg\_max}$ of the power amplifier is restricted by two factors: (1) The maximum transmit power $P_{max}$ supported by the power amplifier hardware; and (2) the maximum transmit power $P_{Tmax}$ allowed based on the maximum operating temperature of the radio frequency device. Based on $P_{max}$ and $P_{Tmax}$, the maximum average power $P_{avg\_max}$ is calculated by using the following Formula (8):

$$P_{avg\_max}=min(P_{max}, P_{Tmax}) \text{ Formula (8)}$$

In Formula (8), $P_{max}$ is an indicator determined during design and manufacturing of the power amplifier, and $P_{max}$ is known. $P_{Tmax}$ varies with the load and environment. In this embodiment, $P_{Tmax}$ is calculated in real time in each periodicity based on a specific periodicity (duration p of the periodicity).

The step of calculating $P_{Tmax}$ of a $k^{th}$ periodicity includes the following step S4021 to step S4023.

Step S4021: A BBU obtains an input parameter for calculation. When calculating the $P_{Tmax}$, the BBU inputs the real-time temperature $T_r$ of the power amplifier at a start moment of the periodicity and the maximum allowable operating temperature $T_{max}$ of the power amplifier. The real-time temperature $T_r$ is the temperature $T_1, T_2, ..., T_n$ calculated based on the Formula (4).

Step S4022: The BBU calculates a maximum steady-state temperature $T_{Lk}$ allowed in a $k^{th}$ periodicity. A formula for calculating a quantity of BBUs is $T_{Lk}=T_r-Ta+\tau/p*(T_{max}-T_r)$.

Step S4023: The BBU calculates, by using Formula (7), load $L_k$ corresponding to $T_{Lk}$, where $P_{Tmax}=L_k$.

The foregoing describes how to calculate a maximum average power of one power amplifier. When a plurality of power amplifiers exist in the RRU, optionally, the maximum average power is calculated for each power amplifier based on the foregoing Formula (7) and step S4021 to step S4023. In addition, for other key radio frequency devices except the power amplifier, the maximum average power is calculated in the same manner.

In summary, in step S402, the real-time temperature of the radio frequency module is used to determine the maximum average transmit power $P_{avg\_max}$ allowed by the power amplifier in the current periodicity, to perform power scheduling by using the maximum average transmit power $P_{avg\_max}$. Generally, if the average transmit power of the power amplifier scheduled by the scheduler in the current periodicity does not exceed the maximum average transmit power $P_{avg\_max}$, it is ensured that the RRU is not overheated.

Step S403: The BBU performs adaptive scheduling on a transmit power. For step S403, refer to the description of step S202 in FIG. 3.

Based on step S402, the maximum average transmit power $P_{avg\_max}$ allowed by the power amplifier in the $k^{th}$ periodicity is calculated, and scheduling control is performed through a water injection method, to obtain a maximum downlink throughput.

For ease of understanding, the following first explains some concepts in the water injection method.

Water represents a power. Water represents a quantized transmit power in a period of time. For example, if the average transmit power within 10s is 10 W, and there are 10000 TTIs in 10s in total, a water volume is 10000* 10 W, or transmit powers within 10s is 10000* 10 W.

A bucket represents a memory space (buffer). The memory space is used to store the water volume (namely, a value of the transmit power). A capacity (namely, the maximum value of the transmit power stored in the memory space) of the bucket is determined by a maximum transmit power supported by the power amplifier hardware. For example, if the maximum transmit power supported by the power amplifier hardware is 20 W and one scheduling time periodicity is 10s, a maximum value of the transmit power of the power amplifier within 10s is 10000*20 W. In this case, the capacity of the bucket is a value greater than or equal to 10000*20 W.

Injecting water into the bucket means that a specific power value is added to the transmit power value stored in the memory space (bucket) at each TTI. For example, in one scheduling time periodicity of 10s, the maximum average transmit power is 10 W, and a base power used for a minimum power is 5 W. When the time periodicity starts, a power value of 10000*5 W is added to the transmit power value stored in the memory space (bucket). Then, at each TTI in the time periodicity, a power value of 5 W is added to the transmit power value stored in the memory space (bucket). When the time periodicity ends, a power value of 10000* 10 W is added to the transmit power value stored in the memory space (bucket).

Draining water from the bucket represents that the radio frequency device has transmitted a specific power at the current TTI. Draining water from the bucket refers to subtracting the transmit power value of the radio frequency device at the current TTI from the transmit power value stored in the memory space (bucket). For example, if the radio frequency device has transmitted a power of 15 W at the current TTI, 15 W is subtracted from the transmit power value stored in the memory space (bucket).

The remaining water in the bucket represents the total powers allowed to be transmitted by the radio frequency device in the remaining time of the current periodicity.

Some concepts in the water injection method are described above. The following describes a principle of implementing adaptive scheduling based on the water injection method.

A basic concept of the water injection method is to limit a total amount of water used from the bucket in a period of time, to ensure that the total amount of water used from the bucket in the period of time does not exceed an amount of water injected into the bucket. In addition, a specific amount of water used from the bucket at each moment in the period of time is not limited, and even all remaining water in the bucket is allowed to be used at a moment.

However, in this embodiment, the adaptive scheduling mainly includes three objectives. A first objective is to control an average power of the radio frequency device in a period of time not to exceed the threshold, to avoid overheat of the radio frequency device caused by the average power exceeding the threshold. A second objective is to try to keep the power used by the radio frequency device at each TTI unlimited in the period of time. When a TTI is in a peak traffic load, the radio frequency device is allowed to transmit as many powers as possible at the TTI. This improves a downlink throughput rate. A third objective is that a power that may be transmitted by the radio frequency device at each TTI is at least a base power used for a minimum power.

It may be learnt that an objective of adaptive scheduling exactly matches an application scenario of the water injection method, and the first objective may be achieved by using a means of limiting the total amount of water used from the bucket in a period of time in the water injection method; and the second objective may be achieved by using a means of not limiting the specific amount of water used from the bucket at each moment in the period of time in the water injection method.

The following describes a specific process of implementing adaptive scheduling based on the water injection method. In the following procedure, an example in which a minimum scheduling time unit is one TTI is used for description.

There are n TTIs in one scheduling control periodicity T, and the n TTIs are respectively denoted as a $TTI_1$ to a $TTI_n$. The scheduler performs the following procedure at the $TTI_1$ to the $TTI_n$, so that the transmit power of the radio frequency device in the periodicity T is less than or equal to the maximum average transmit power allowed to be used.

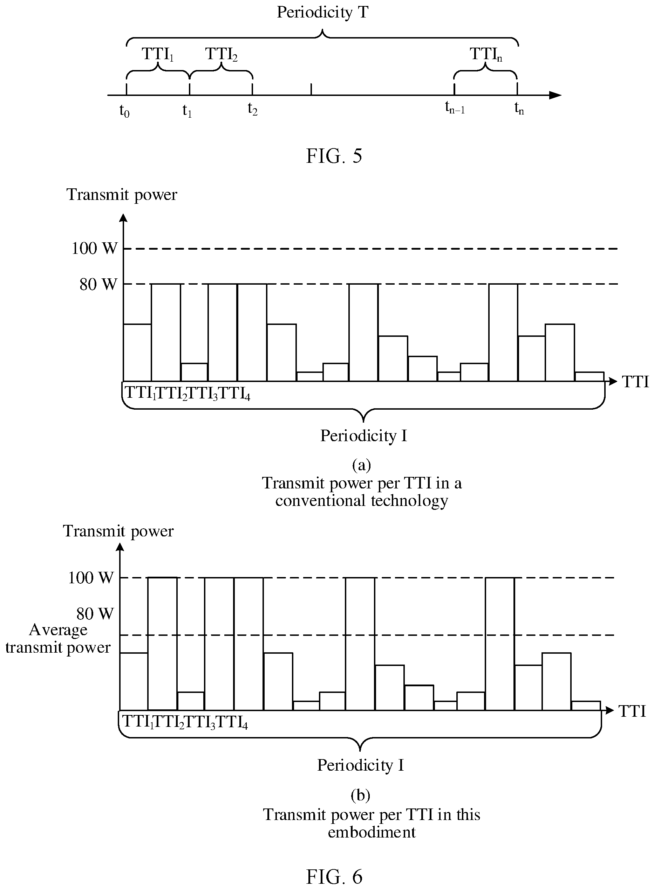

For a relationship between TTIs, refer to FIG. 5.

The following describes actions of a scheduler at each TTI in one periodicity.

A step performed at a moment $t_0$ (to be specific, a moment before scheduling starts) is: initializing one "bucket", to be specific, a memory space is used to store a value of the transmit power. For example, a variable buf is used to represent a transmit power (or a water volume) stored in the memory space. "Water" of buf=$(P_{avg\_max}-P_{base})*n$ is injected into the bucket, to be specific, $(P_{avg\_max}-P_{base})*n$ is written into the memory space. A capacity of the "bucket" needs to be greater than $P_{max}*n$. $P_{max}$ is a maximum transmit power allowed by radio frequency device hardware. $P_{avg\_max}$ is a maximum average transmit power allowed in a corresponding periodicity calculated in step S402. $P_{base}$ is less than $P_{avg\_max}$ and $P_{base}$ is greater than 0. A size of $P_{base}$ is determined based on different scenarios.

At the $TTI_1$, the scheduler performs the following step S40311 to step S40313.

Step S40311: A scheduler increases a value of a transmit power stored in a memory space by a base power $P_{base}$, so that the transmit power value stored in the memory space is updated from buf at a moment $t_0$ to buf+$P_{base}$.

Step S40312: The scheduler determines a maximum power $P_{max\_tti}$ allowed at a current TTI. $P_{max\_tti}$=min($P_{max}$, buf). $P_{max}$ is the maximum transmit power supported by the power amplifier hardware, and buf is a non-transmit power of the radio frequency device. In addition, the power $P_{max\_tti}$ that has been notified to the scheduler is subtracted from the transmit power value stored in the memory space, so that the transmit power value stored in the memory space is buf=buf-$P_{max\_tti}$.

Step S40313: The scheduler performs scheduling based on the maximum power $P_{max\_tti}$ allowed at the current TTI, to ensure that a transmit power at the current TTI does not exceed the maximum power $P_{max\_tti}$.

At each TTI of the $TTI_2$ to the $TTI_n$, the scheduler performs the following step S40321 to step S40324.

Step S40321: A scheduler increases a transmit power value stored in a memory space by $P_{base}$, so that the transmit power value stored in the memory space is updated from buf at a previous TTI to buf+$P_{base}$.

Step S40322: The scheduler determines, based on a transmit power at a historical TTI and a maximum transmit power value at the historical TTI, a power that is not transmitted by a radio frequency device at the historical TTI, and adds the power that is not transmitted at the historical TTI to the transmit power value stored in the memory space.

The historical TTI refers to a TTI that has been scheduled in a current periodicity, or a TTI before a current TTI. An example in which the current TTI is a TTIi in the periodicity T is used. For the $TTI_i$, the historical TTI is, for example, a part or all of TTIs from a $TTI_1$ to a $TTI_{i-1}$ in the periodicity T.

Optionally, the scheduler determines, based on a power $P_{real\_last\_tti}$ transmitted at the previous TTI and the maximum transmit power $P_{max\_last\_tti}$ transmitted at the previous TTI, that a power at which no signal is transmitted at the previous TTI is $P_{max\_last\_tti}-P_{real\_last\_tti}$. The scheduler increases the transmit power stored in the memory space by $P_{max\_last\_tti}-P_{real\_last\_tti}$, so that the transmit power value stored in the memory space is updated from the buf at the previous TTI to the buf+$P_{base}$+($P_{max\_last\_tti}-P_{real\_last\_tti}$). This manner may be used to implement the step of determining a transmit power threshold in a first scheduling time unit based on a transmit power in a second scheduling time unit involved in the method in FIG. 3. The transmit power in the second scheduling time unit is $P_{real\_last\_tti}$, and the transmit power threshold in the first scheduling time unit is buf+$P_{base}$+($P_{max\_last\_tti}-P_{real\_last\_tti}$).

Step S40323: The scheduler determines a maximum power $P_{max\_tti}$ allowed at a current TTI. $P_{max\_tti}$=min($P_{max}$, buf). The maximum power allowed at the current TTI is subtracted from the transmit power stored in the memory space. In other words, buf=buf-$P_{max\_tti}$.

Step S40324: The scheduler limits, based on the maximum power $P_{max\_tti}$, a value of a bandwidth occupied on a data channel, or limits a power spectral density used when data is sent on the data channel, to control a transmit power to not exceed the maximum power $P_{max\_tti}$.

Optionally, the scheduler performs targeted power allocation on different channels, to be specific, a limitation on a bandwidth or a power spectral density is performed on the data channel (for example, a PDSCH), and the bandwidth and the power spectral density occupied when the data is sent on a common channel are not limited. In other words, powers are fixedly allocated by a common channel to prevent coverage of a radio frequency signal of the base station from shrinking, and the power of the data channel is scheduled and controlled based on the threshold, and adaptively change with an average power.

In the scheduling procedure described above, selecting one TTI from duration of one scheduling time unit is an optional manner. Alternatively, one scheduling time unit includes a plurality of TTIs. When one scheduling time unit includes a plurality of TTIs, the "previous TTI" in step S40322 may be replaced with "each TTI in the previous scheduling time unit". Specific implementation details are similar to those in step 540321 to step S40324, and details are not described herein again.

By performing step S403 of the example 1, because power control is performed with an objective that the average transmit power in one periodicity does not exceed the threshold, an average power in one periodicity is limited in a control process, and an instantaneous power at each moment in the periodicity is allowed to be released to a maximum capability of the power amplifier hardware, so that a power control process matches a peak-to-valley random change of a downlink load. This helps greatly reduce a probability that an actual service is suppressed, improves a downlink user throughput, and improves a scheduling effect. Specifically, because a heat capacity of the radio frequency module is great, heat accumulation and dissipation are reflected in a process of slowly changing a temperature, load fluctuation in a specific period of time does not cause a rapid change of the temperature. Therefore, it is ensured that average power of the radio frequency device in a specific period of time does not exceed a power threshold, and it may be ensured that a temperature of the radio frequency device does not exceed a temperature threshold to some extent. In addition, load changes randomly in a real scenario. The load is high during busy hours and low during off-peak hours. In addition, the change is fast at a millisecond level. Therefore, when it is ensured that the average power of the radio frequency device in a specific period of time (for example, 1s or 10s) does not exceed the power threshold, scheduling is performed in a manner of almost not limiting a specific power threshold per millisecond, so that the power threshold per millisecond varies with a service requirement.

According to the method provided in the foregoing example 1, a BBU and an RRU cooperate with each other, to perform real-time temperature tracking on the RRU, and the transmit power of the radio frequency device is increased through an adaptive scheduling technology, to improve a downlink user throughput rate and improve performance of a base station when avoiding overheat of the radio frequency module.

FIG. 6 is a schematic diagram of a transmit power of a radio frequency device at each TTI in a periodicity I. Numbers such as 100 W and 80 W involved in FIG. 6 are merely examples, and in this embodiment, a specific value of the transmit power is not limited.

(a) in FIG. 6 shows a transmit power of the radio frequency device at each TTI in a solution in which a power threshold of the radio frequency device is set in advance based on a highest ambient temperature and a maximum operating load of the radio frequency device. As shown in (a) in FIG. 6, the maximum transmit power supported by the power amplifier hardware of an RRU is 100 W. However, because heat dissipation of the RRU is limited, before the method provided in this embodiment is used, a maximum power allowed to be transmitted by the power amplifier is 80 W. The maximum power allowed to be transmitted by the power amplifier is limited to 80 W because an actual cell load changes randomly and the ambient temperature of the base station also changes. When the ambient temperature reaches the highest ambient temperature (typically, solar radiation+50°C) and the cell load reaches 100%, the maximum transmit power is set to 80 W based on the highest ambient temperature and load of 100%. In this case, the power amplifier operates based on the set maximum transmit power of 80 W in a whole temperature range, and consequently the transmit power of the power amplifier is always lower than the maximum transmit power of 100 W supported by the hardware. It may be learnt that the transmit power of the power amplifier is greatly limited.

However, in the foregoing embodiment, the maximum average transmit power $P_{avg\_max}$ allowed in each periodicity I is calculated through accurate real-time temperature tracking and based on the current temperature, and scheduling in a corresponding periodicity is controlled based on the maximum average transmit power $P_{avg\_max}$. In this case, the maximum power allowed to be transmitted by the radio frequency device at any TTI in the periodicity may exceed $P_{avg\_max}$, and reach the maximum transmit power $P_{max}$ (for the RRU, $P_{max}$ is 100 W) supported by the power amplifier, provided that a final average transmit power of the radio frequency device in the periodicity I does not exceed $P_{avg\_max}$. Therefore, in this embodiment, when the average power does not exceed the maximum average transmit power of 80 W, the transmit power of the power amplifier may be supported to reach 100 W, and a higher downlink user throughput may be brought by increasing the maximum transmit power.

For example, refer to (b) in FIG. 6. (b) in FIG. 6 shows a transmit power of the radio frequency device at each TTI in this embodiment. An average transmit power threshold of the radio frequency device in a periodicity I is 80 W, and a maximum transmit power supported by the radio frequency device hardware is 100 W. It may be learned from (b) in FIG. 6 that an average value of the transmit power of the radio frequency device at all TTIs in the periodicity I is limited, but the average transmit power of the radio frequency device in the periodicity I does not exceed 80 W. A specific transmit power of the radio frequency device at each TTI in the periodicity I fluctuates. At many TTIs in the periodicity I, the transmit power of the radio frequency device exceeds the average transmit power threshold of 80 W, and reaches a maximum transmit power of 100 W supported by hardware. For example, the transmit power of the radio frequency device at the $TTI_1$ is less than 80 W. The transmit power of the radio frequency device at a $TTI_2$ is greater than 80 W, reaching the maximum transmit power of 100 W. The transmit power of the radio frequency device at a $TTI_3$ is less than 80 W. The transmit power of the radio frequency device at a $TTI_4$ is greater than 80 W, reaching the maximum transmit power of 100 W.

80 W is an example of the maximum average transmit power. When the ambient temperature is lower than+50°C, the maximum average transmit power may exceed 80 W, and the maximum average transmit power is specifically calculated and obtained according to the solution in the foregoing embodiment.

In addition, when the temperature is close to the highest ambient temperature defined in an RRU product specification, in this embodiment, the temperature of the RRU may be kept always lower than the allowed maximum operating temperature, and transmit the maximum power allowed at the temperature. Similar to the control manner at a normal temperature, a control manner in an environment of a high temperature is implemented by limiting the average transmit power. For a TTI at which an actual service load is required, the power amplifier is still allowed to transmit 100 W, which reduces the impact on service performance.

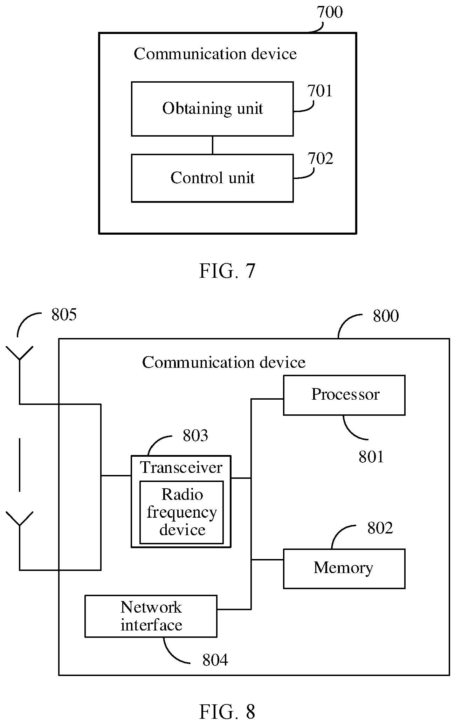

FIG. 7 is a schematic diagram of a structure of a communication device 700 according to an embodiment of this application. The communication device 700 may be located in a base station, or the communication device 700 is a base station. The communication device 700 includes an obtaining unit 701 and a control unit 702.

Optionally, with reference to the application scenario shown in FIG. 1, the communication device 700 shown in FIG. 7 is the communication device 11 in FIG. 1.

Optionally, with reference to FIG. 2, the communication device 700 shown in FIG. 7 is disposed in the BBU 31 in FIG. 2, the obtaining unit 701 is the temperature tracking module 311 in FIG. 2, and the control unit 702 is the scheduler 312 in FIG. 2.

Optionally, with reference to FIG. 3, the communication device 700 shown in FIG. 7 is the communication device in the method procedure shown in FIG. 3. The obtaining unit 701 is configured to support the communication device 700 in performing S201. The control unit 702 is configured to support the communication device 700 in performing S202.

Optionally, with reference to FIG. 4A and FIG. 4B, the communication device 700 shown in FIG. 7 is configured to perform the method procedure shown in FIG. 4A and FIG. 4B. The obtaining unit 701 is configured to support the communication device 700 in performing S401 and S402 in FIG. 4A and FIG. 4B. The control unit 702 is configured to support the communication device 700 in performing S403 in FIG. 4A and FIG. 4B.

The apparatus embodiments described in FIG. 7 are merely examples. For example, the unit division is merely logical function division and there may be other division manners in other implementations. For example, multiple units or components may be combined or integrated into another system, or some features may be omitted or not performed. Functional units in embodiments of this application may be integrated into one processing unit, or each of the units may exist alone physically, or two or more units are integrated into one unit.

All or part of units in the communication device 700 are implemented through software, hardware, firmware, or any combination thereof.

When software is used for implementation, for example, the obtaining unit 701 and the control unit 702 are implemented by a software functional unit generated after the at least one processor 801 in FIG. 8 reads the program code stored in the memory 802.

When hardware is used for implementation, for example, the foregoing units in FIG. 7 are separately implemented by different hardware in the communication device. For example, the obtaining unit 701 is implemented by a part of processing resources (for example, one or two cores in a multi-core processor) in the at least one processor 801 in FIG. 8, and the control unit 702 is implemented by a part of processing resources (for example, another core in the multi-core processor) in the at least one processor 801 in FIG. 8, or a field-programmable gate array (field-programmable gate array, FPGA), or a programmable device such as a coprocessor.

When a combination of software and hardware is used for implementation, for example, the obtaining unit 701 is implemented by a hardware programmable device, and the control unit 702 is a software functional unit generated after the CPU reads program code stored in the memory.

FIG. 8 is a schematic diagram of a structure of a communication device 800 according to an embodiment of this application.

Optionally, with reference to the application scenario shown in FIG. 1, the communication device 800 shown in FIG. 8 is the communication device 11 in FIG. 1.

Optionally, with reference to FIG. 2, the communication device 800 shown in FIG. 8 includes a BBU 31, a radio frequency module 32, and an antenna 33 in FIG. 2. The processor 801 in FIG. 8 is disposed in the BBU 31 in FIG. 2, the transceiver 803 in FIG. 8 includes the radio frequency module 32 in FIG. 2, and the antenna 805 in FIG. 8 is the antenna 33 in FIG. 2.

Optionally, with reference to FIG. 3, the communication device 800 shown in FIG. 8 is the communication device in the method procedure shown in FIG. 3. The processor 801 in FIG. 8 is configured to support the communication device 800 in performing S201 and S202.

Optionally, with reference to FIG. 4A and FIG. 4B, the communication device 800 shown in FIG. 8 is configured to perform the method procedure shown in FIG. 4A and FIG. 4B. The processor 801 is configured to support the communication device 800 in performing S401, S402, and S403 in FIG. 4A and FIG. 4B.

The communication device 800 includes at least one processor 801, at least one memory 802, at least one transceiver 803, at least one network interface 804, and one or more antennas 805. The processor 801, the memory 802, the transceiver 803, and the network interface 804 are connected, for example, through a bus. The antenna 805 is connected to the transceiver 803. The network interface 804 is configured to enable the communication device 800 to be connected to another communication device 800 through a communication link. For example, the communication device 800 is connected to a core network element through an S1 interface. In embodiments of this application, the connection may include various types of interfaces, transmission lines, buses, or the like. This is not limited in this embodiment.

The processor in embodiments of this application, for example, the processor 801, optionally includes at least one of the following types: a general-purpose central processing unit (central processing unit, CPU), a digital signal processor (digital signal processor, DSP), a microprocessor, an application-specific integrated circuit (application-specific integrated circuit, ASIC), a microcontroller unit (microcontroller unit, MCU), a field programmable gate array (field programmable gate array, FPGA), or an integrated circuit configured to implement a logical operation. For example, the processor 801 may be a single-CPU (single-CPU) processor or a multi-CPU (multi-CPU) processor. The at least one processor 801 may be integrated into one chip or located on a plurality of different chips.

The memory in embodiments of this application, for example, the memory 802, optionally includes at least one of the following types: a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory is not limited thereto.

The memory 802 optionally exists independently, and is connected to the processor 801. Alternatively, the memory 802 and the processor 801 are optionally integrated together, for example, integrated in a chip. The memory 802 can store program code for performing technical solutions in embodiments of this application, and the processor 801 controls execution of the program code. Various types of executed computer program code may also be considered as drivers of the processor 801. For example, the processor 801 is configured to execute the computer program code stored in the memory 802, to implement the technical solutions in embodiments of this application.

The transceiver 803 includes one or more radio frequency devices. The transceiver 803 is configured to support receiving or sending of a radio frequency signal between the communication device 800 and a terminal, and the transceiver 803 is connected to the antenna 805. Specifically, the one or more antennas 805 may receive a radio frequency signal. The transceiver 803 may be configured to: receive the radio frequency signal from the antenna, convert the radio frequency signal into a digital baseband signal or a digital intermediate frequency signal, and provide the digital baseband signal or the digital intermediate frequency signal for the processor 801, so that the processor 801 further processes the digital baseband signal or the digital intermediate frequency signal, for example, performs demodulation processing and decoding processing. In addition, the transceiver 803 may be configured to: receive a modulated digital baseband signal or a modulated digital intermediate frequency signal from the processor 801; convert the modulated digital baseband signal or digital intermediate frequency signal into a radio frequency signal; and send the radio frequency signal through the one or more antennas 805. Specifically, the transceiver 803 may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transceiver 803 may selectively perform one or more levels of frequency up-mixing processing and digital-to-analog conversion processing on the modulated digital baseband signal or the modulated digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The transceiver may be referred to as a transceiver circuit, a transceiver unit, a transceiver component, a sending circuit, a sending unit, a sending component, or the like.

Optionally, in FIG. 8, the processor 801 and the memory 802 are located in a BBU, and the transceiver 803 is located in an RRU or an AAU. The communication device 80011 includes the BBU and the RRU, and further includes at least one of an AAU or an antenna.

In some embodiments, a network system is further provided. The network system includes a BBU and a radio frequency device. The BBU is configured to perform the method provided in FIG. 3 or FIG. 4A and FIG. 4B.

In some embodiments, a computer-readable storage medium is further provided. The storage medium stores at least one instruction; and when the instructions are run on a computer, the computer is enabled to perform the method provided in FIG. 3 or FIG. 4A and FIG. 4B.

In some embodiments, a computer program product is further provided. The computer program product includes one or more computer program instructions. When the computer program instructions are loaded and run by a computer, the computer is enabled to perform the method provided in FIG. 3 or FIG. 4A and FIG. 4B.

In some embodiments, a chip is further provided, including a memory and a processor. The memory is configured to store computer instructions, and the processor is configured to invoke the computer instructions from the memory and run the computer instructions, to perform the method provided in FIG. 3 or FIG. 4A and FIG. 4B.

Embodiments in this specification are all described in a progressive manner, for same or similar parts in embodiments, reference may be made to these embodiments, and each embodiment focuses on a difference from other embodiments.

A refers to B, which means that A is the same as B or A is a simple variant of B.

The terms "first" and "second" in the specification and claims of embodiments of this application are intended to distinguish between different objects but do not indicate a particular order of objects or cannot be understood as an indication or implication of relative importance. For example, the first scheduling time unit and the second scheduling time unit are used to distinguish between different scheduling time units, but are not used to describe a specific sequence of scheduling time units. It cannot be understood that the first scheduling time unit is more important than the second scheduling time unit.

In embodiments of this application, unless otherwise specified, "at least one" means one or more, and "a plurality of" means two or more. For example, a plurality of scheduling time units are two or more scheduling time units.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid state disk Solid-State Disk (SSD)), or the like.

The foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A method for controlling a transmit power, wherein the method comprises:

   obtaining, based on a temperature of a radio frequency device in a first time period and an operating temperature threshold of the radio frequency device, a transmit power threshold of the radio frequency device in the first time period; and
   controlling a transmit power of the radio frequency device in the first time period to be less than or equal to the transmit power threshold in the first time period.

2. The method according to claim 1, wherein the obtaining, based on a temperature of a radio frequency device in a first time period and an operating temperature threshold of the radio frequency device, a transmit power threshold of the radio frequency device in the first time period comprises:

   obtaining, based on a temperature of the radio frequency device at a start moment of the first time period and the operating temperature threshold of the radio frequency device, a maximum steady-state temperature allowed in the first time period; and
   obtaining the transmit power threshold of the radio frequency device in the first time period based on the maximum steady-state temperature allowed in the first time period and a correspondence between a temperature of the radio frequency device and a transmit power of the radio frequency device.

3. The method according to claim 1 or 2, wherein the transmit power threshold in the first time period is an average transmit power threshold in the first time period, the first time period comprises a plurality of scheduling time units, and the controlling a transmit power of the radio frequency device in the first time period to be less than or equal to the transmit power threshold in the first time period comprises:
   controlling an average value of transmit powers of the radio frequency device in the plurality of scheduling time units in the first time period to be less than or equal to the average transmit power threshold in the first time period.

4. The method according to claim 3, wherein the first time period comprises a first scheduling time unit and a second scheduling time unit, the second scheduling time unit is located before the first scheduling time unit, and the controlling an average value of transmit powers of the radio frequency device in the plurality of scheduling time units in the first time period to be less than or equal to the average transmit power threshold in the first time period comprises:

determining a transmit power threshold in the first scheduling time unit based on the average transmit power threshold in the first time period and a transmit power of the radio frequency device in the second scheduling time unit, wherein the transmit power threshold in the first scheduling time unit is negatively correlated with a value of the transmit power in the second scheduling time unit; and
controlling a transmit power of the radio frequency device in the first scheduling time unit to be less than or equal to the transmit power threshold in the first scheduling time unit.

5. The method according to claim 4, wherein that the transmit power threshold in the first scheduling time unit is negatively correlated with a value of the transmit power in the second scheduling time unit comprises:

when the transmit power of the radio frequency device in the second scheduling time unit is less than the average transmit power threshold, the transmit power of the radio frequency device in the first scheduling time unit is greater than the average transmit power threshold in the first time period; or
when the transmit power of the radio frequency device in the second scheduling time unit is greater than the average transmit power threshold in the first time period, the transmit power of the radio frequency device in the first scheduling time unit is less than the average transmit power threshold in the first time period.

6. The method according to claim 3, wherein the first time period comprises a first scheduling time unit, a second scheduling time unit, and a third scheduling time unit, the second scheduling time unit and the third scheduling time unit are located before the first scheduling time unit, and the controlling an average value of transmit powers of the radio frequency device in the plurality of scheduling time units in the first time period to be less than or equal to the average transmit power threshold in the first time period comprises:

obtaining a sum of transmit powers of the radio frequency device in the second scheduling time unit and the third scheduling time unit;
determining a transmit power threshold in the first scheduling time unit based on the average transmit power threshold in the first time period and the sum of transmit powers, wherein the transmit power threshold in the first scheduling time unit is negatively correlated with a value of the sum of transmit powers; and
controlling a transmit power of the radio frequency device in the first scheduling time unit to be less than or equal to the transmit power threshold in the first scheduling time unit.

7. The method according to any one of claims 1 to 6, wherein the controlling a transmit power of the radio frequency device in the first time period to be less than or equal to the transmit power threshold in the first time period comprises:

controlling, by adjusting a bandwidth occupied by data sent by the radio frequency device on a data channel, the transmit power of the radio frequency device in the first time period to be less than or equal to the transmit power threshold in the first time period; or
controlling, by adjusting a power spectral density of the radio frequency device, the transmit power of the radio frequency device in the first time period to be less than or equal to the transmit power threshold in the first time period.

8. The method according to any one of claims 1 to 7, wherein the method further comprises:
obtaining the temperature of the radio frequency device in the first time period.

9. The method according to claim 8, wherein the obtaining the temperature of the radio frequency device in the first time period comprises:

predicting the temperature of the radio frequency device in the first time period based on load of the radio frequency device in the first time period and a temperature model;
or
predicting a temperature variation amount of the radio frequency device in the first time period based on load of the radio frequency device in the first time period and the temperature model; and
determining the temperature of the radio frequency device in the first time period based on the temperature of the radio frequency device at the start moment of the first time period and the temperature variation amount.

10. The method according to claim 9, wherein the temperature model comprises an environment compensation amount, and the environment compensation amount is used to compensate for impact caused by an environment in which the radio frequency device is located on the temperature of the radio frequency device.

11. The method according to any one of claims 1 to 10, wherein the method is performed by a baseband unit BBU.

12. The method according to any one of claims 1 to 11, wherein after the first time period, a temperature of the radio frequency device is less than or equal to the operating temperature threshold.

13. A communication device, wherein the communication device comprises:

an obtaining unit, configured to obtain, based on a temperature of a radio frequency device in a first time period and an operating temperature threshold of the radio frequency device, a transmit power threshold of the radio frequency device in the first time period; and
a control unit, configured to control a transmit power of the radio frequency device in the first time period to be less than or equal to the transmit power threshold in the first time period.

14. The communication device according to claim 13, wherein the obtaining unit is specifically configured to obtain, based on a temperature of the radio frequency device at a start moment of the first time period and the operating temperature threshold of the radio frequency device, a maximum steady-state temperature allowed in the first time period; and obtain the transmit power threshold of the radio frequency device in the first time period based on the maximum steady-state temperature allowed in the first time period and a correspondence between a temperature of the radio frequency device and a transmit power of the radio frequency device.

15. The communication device according to claim 13 or 14, wherein the transmit power threshold in the first time period is an average transmit power threshold in the first time period, the first time period comprises a plurality of scheduling time units, and the control unit is specifically configured to control an average value of transmit powers of the radio frequency device in the plurality of scheduling time units in the first time period to be less than or equal to the average transmit power threshold in the first time period.

16. The communication device according to claim 15, wherein the first time period comprises a first scheduling time unit and a second scheduling time unit, the second scheduling time unit is located before the first scheduling time unit, the control unit is specifically configured to determine a transmit power threshold in the first scheduling time unit based on the average transmit power threshold in the first time period and a transmit power of the radio frequency device in the second scheduling time unit, and the transmit power threshold in the first scheduling time unit is negatively correlated with a value of the transmit power in the second scheduling time unit; and control a transmit power of the radio frequency device in the first scheduling time unit to be less than or equal to the transmit power threshold in the first scheduling time unit.

17. The communication device according to claim 16, wherein that the transmit power threshold in the first scheduling time unit is negatively correlated with a value of the transmit power in the second scheduling time unit comprises:

when the transmit power of the radio frequency device in the second scheduling time unit is less than the average transmit power threshold, the transmit power of the radio frequency device in the first scheduling time unit is greater than the average transmit power threshold in the first time period; or
when the transmit power of the radio frequency device in the second scheduling time unit is greater than the average transmit power threshold in the first time period, the transmit power of the radio frequency device in the first scheduling time unit is less than the average transmit power threshold in the first time period.

18. The communication device according to claim 15, wherein the first time period comprises a first scheduling time unit, a second scheduling time unit, and a third scheduling time unit, the second scheduling time unit and the third scheduling time unit are located before the first scheduling time unit, and the control unit is specifically configured to obtain a sum of transmit powers of the radio frequency device in the second scheduling time unit and the third scheduling time unit; determine a transmit power threshold in the first scheduling time unit based on the average transmit power threshold in the first time period and the sum of transmit power, wherein the transmit power threshold in the first scheduling time unit is negatively correlated with a value of the sum of transmit powers; and control a transmit power of the radio frequency device in the first scheduling time unit to be less than or equal to the transmit power threshold in the first scheduling time unit.

19. The communication device according to any one of claims 15 to 18, wherein the control unit is specifically configured to control, by adjusting a bandwidth occupied by data sent by the radio frequency device on a data channel, the transmit power of the radio frequency device in the first time period to be less than or equal to the transmit power threshold in the first time period; or

control, by adjusting a power spectral density of the radio frequency device, a transmit power of the radio frequency device in the first time period to be less than or equal to the transmit power threshold in the first time period.

20. The communication device according to any one of claims 15 to 19, wherein the obtaining unit is further specifically configured to obtain the temperature of the radio frequency device in the first time period.

21. The communication device according to claim 20, wherein the obtaining unit is specifically configured to:

predict the temperature of the radio frequency device in the first time period based on load of the radio frequency device in the first time period and a temperature model; or

predict a temperature variation amount of the radio frequency device in the first time period based on load of the radio frequency device in the first time period and the temperature model; and

determine the temperature of the radio frequency device in the first time period based on the temperature of the radio frequency device at the start moment of the first time period and the temperature variation amount.

22. The communication device according to claim 21, wherein the temperature model comprises an environment compensation amount, and the environment compensation amount is used to compensate for impact caused by an environment in which the radio frequency device is located on the temperature of the radio frequency device.

23. A communication device, wherein the communication device comprises a processor, the processor is coupled to a memory, the memory is configured to store computer program instructions, and the processor is configured to execute the computer program instructions in the memory, to enable the communication device to perform the method according to any one of claims 1 to 12.

24. A network system, wherein the network system comprises a baseband unit and a radio frequency device, and the baseband unit is configured to perform the method according to any one of claims 1 to 12.

25. A computer-readable storage medium, wherein the storage medium stores at least one computer program instruction; and when the computer program instructions are run on a computer, the computer is enabled to perform the method according to any one of claims 1 to 12.

26. A computer program product, wherein the computer program product comprises one or more computer program instructions; and when the computer program instructions are loaded and run by a computer, the computer is enabled to perform the method according to any one of claims 1 to 12.

FIG. 1

FIG. 2

A communication device obtains a temperature of a radio frequency device in a first time period — S200

The communication device obtains, based on the temperature of the radio frequency device in the first time period and an operating temperature threshold of the radio frequency device, a transmit power threshold of the radio frequency device in the first time period — S201

The communication device obtains, based on a temperature of the radio frequency device at a start moment of the first time period and the operating temperature threshold of the radio frequency device, a maximum steady-state temperature allowed in the first time period — S2011

The communication device obtains the transmit power threshold of the radio frequency device in the first time period based on the maximum steady-state temperature allowed in the first time period and a correspondence between a temperature of the radio frequency device and a transmit power of the radio frequency device — S2012

The communication device controls the transmit power of the radio frequency device in the first time period to be less than or equal to the transmit power threshold in the first time period — S202

FIG. 3

A BBU tracks a real-time temperature of a radio frequency module through a temperature model, and corrects the temperature model

An RRU is powered on, and the RRU starts to operate — S4011

The RRU reports a temperature of a power amplifier to the BBU for the first time — S4012

The BBU takes a temperature at a start moment of a periodicity I as the temperature reported by the RRU, and an environmental compensation value as 0 — S4013

The BBU sequentially calculates a temperature of the power amplifier at a first TTI to an $n^{th}$ TTI in the periodicity I — S4014

When a time point reaches an end moment of the periodicity I, the RRU reports the temperature of the power amplifier to the BBU again.
The BBU calculates an environment compensation amount based on the temperature of the power amplifier reported again by the RRU, and updates the environment compensation amount in the temperature model — S4015

Starting from a next periodicity of the periodicity I, the BBU returns to step S4014 to start calculating a temperature obtained when each TTI in a next periodicity ends — S4016

S401

S402

The BBU calculates a maximum average power that may be used

The BBU obtains an input parameter for calculation — S4021

The BBU calculates a maximum steady-state temperature allowed in a $k^{th}$ periodicity — S4022

The BBU calculates a maximum transmit power allowed based on a highest operating temperature of a radio frequency device — S4023

TO FIG. 4B

FIG. 4A

EP 4 383 834 A1

CONT. FROM
FIG. 4A

The BBU performs adaptive scheduling on a transmit power

**At a first TTI**

A scheduler increases a transmit power value stored in a memory space by a base power — S40311

The scheduler determines a maximum power allowed to be used at a current TTI — S40312

The scheduler performs scheduling based on the maximum power allowed to be used at the current TTI, to ensure that a transmit power at the current TTI does not exceed the maximum power — S40313

**At a second TTI to a last TTI**

A scheduler increases a transmit power value stored in a memory space by a base power — S40321

The scheduler determines, based on a transmit power at a historical TTI and a maximum transmit power value at the historical TTI, a power that is not transmitted by a radio frequency device at the historical TTI — S40322

The scheduler determines a maximum power allowed by a current TTI, and simultaneously subtracts the maximum power allowed by the current TTI from the transmit power value stored in the memory space — S40323

The scheduler limits, based on the maximum power, a value of a bandwidth occupied on a data channel, or limits a power spectral density used when data is sent on the data channel, to control the transmit power not to exceed the maximum power — S40324

S403

FIG. 4B

37

Periodicity T

TTI₁  TTI₂                    TTIₙ

t₀     t₁     t₂          tₙ₋₁     tₙ

FIG. 5

Transmit power

100 W

80 W

TTI₁TTI₂TTI₃TTI₄

TTI

Periodicity I

(a)
Transmit power per TTI in a
conventional technology

Transmit power

100 W

80 W
Average
transmit power

TTI₁TTI₂TTI₃TTI₄

TTI

Periodicity I

(b)
Transmit power per TTI in this
embodiment

FIG. 6

700

Communication device

Obtaining unit — 701

Control unit — 702

FIG. 7

805

800

Communication device

Processor

801

803

Transceiver

Radio
frequency
device

802

Memory

Network
interface

804

FIG. 8

<table>
<tr><td colspan="2" align="center">**INTERNATIONAL SEARCH REPORT**</td><td colspan="2">International application No.<br>**PCT/CN2022/094956**</td></tr>
</table>

**A.  CLASSIFICATION OF SUBJECT MATTER**

H04W 52/02(2009.01)i

According to International Patent Classification (IPC) or to both national classification and IPC

**B.  FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNTXT; ENTXTC; WPABS; WPABSC; USTXT; EPTXT; WOTXT; 3GPP; CJFD: 射频, 基带, 功率, 温度, 阈值, 门限, radio, base band, power, temperature, threshold

**C.  DOCUMENTS CONSIDERED TO BE RELEVANT**

| Category* | Citation of document, with indication, where appropriate, of the relevant passages | Relevant to claim No. |
|---|---|---|
| X | CN 103118389 A (DATANG MOBILE COMMUNICATIONS EQUIPMENT CO., LTD.) 22 May 2013 (2013-05-22)<br>description, paragraphs [0007]-[0038] | 1-26 |
| A | CN 102422682 A (QUALCOMM INC.) 18 April 2012 (2012-04-18)<br>entire document | 1-26 |
| A | US 2014376430 A1 (APPLE INC.) 25 December 2014 (2014-12-25)<br>entire document | 1-26 |
| A | WO 2021088000 A1 (GUANGDONG OPPO MOBILE TELECOMMUNICATIONS CORP., LTD.) 14 May 2021 (2021-05-14)<br>entire document | 1-26 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 July 2022** | **18 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="2" align="center">**INTERNATIONAL SEARCH REPORT**<br>**Information on patent family members**</td><td colspan="2">International application No.<br><br>**PCT/CN2022/094956**</td></tr>
</table>

| Patent document cited in search report | | | Publication date (day/month/year) | Patent family member(s) | | | Publication date (day/month/year) |
|---|---|---|---|---|---|---|---|
| CN | 103118389 | A | 22 May 2013 | WO | 2014114171 | A1 | 31 July 2014 |
| | | | | EP | 2938119 | A1 | 28 October 2015 |
| | | | | US | 2015338859 | A1 | 26 November 2015 |
| CN | 102422682 | A | 18 April 2012 | EP | 2894907 | A1 | 15 July 2015 |
| | | | | JP | 2014014088 | A | 23 January 2014 |
| | | | | TW | 201127137 | A | 01 August 2011 |
| | | | | US | 2010285828 | A1 | 11 November 2010 |
| | | | | JP | 2016040927 | A | 24 March 2016 |
| | | | | JP | 2012526478 | A | 25 October 2012 |
| | | | | EP | 2430862 | A2 | 21 March 2012 |
| | | | | WO | 2010129667 | A2 | 11 November 2010 |
| | | | | KR | 20120007076 | A | 19 January 2012 |
| US | 2014376430 | A1 | 25 December 2014 | US | 2016212713 | A1 | 21 July 2016 |
| WO | 2021088000 | A1 | 14 May 2021 | | None | | |

Form PCT/ISA/210 (patent family annex) (January 2015)

**EP 4 383 834 A1**

## REFERENCES CITED IN THE DESCRIPTION

### Patent documents cited in the description

- CN 202111016801